# EUROPEAN PATENT APPLICATION

(11) **EP 2 037 560 A1**
(43) Date of publication of application: **18.03.2009**
(21) Application number: 07745246.4
(22) Date of filing: 14.06.2007
(51) Int. Cl.: H02M 7/48, H02P 21/00, H02P 27/04

(54) **ELECTRIC MOTOR DRIVING DEVICE**

(30) Priority: 26.06.2006 JP 2006175640; 29.05.2007 JP 2007142408
(71) Applicant: Sanyo Electric Co., Ltd., Osaka 570-8677 (JP)
(72) Inventor: KUBO, Mamoru, Isesaki-shi, Gunma 3700113 (JP); NOJIMA, Kenji, Ota-shi, Gunma 3730816 (JP); OTAGAKI, Kazuhisa, Ora-gun, Gunma 3700535 (JP)
(74) Representative: Glawe, Delfs, Moll
(86) International application number: PCT/JP2007/061989
(87) International publication number: WO 2008/001615

(57) **Abstract**

A drive for motor that can be operated up to a high load while improving efficiency of an inverter is provided. The drive for a motor includes: a voltage conversion circuit 2 that changes a value of a DC voltage and outputs the DC voltage; an inverter 3 that converts the DC voltage output from the voltage conversion circuit into an AC voltage, the conversion being performed by a switching operation of a switching element; and control means that controls the DC voltage output from the voltage conversion circuit and controls a voltage output from the inverter by the switching element so as to drive the motor 1. The control means executes DC voltage adjustment control in which the DC voltage output from the voltage conversion circuit is controlled based on a modulation factor of the DC voltage modulated by the inverter so that the modulation factor becomes closer to 1.

## Description

### BACKGROUND OF THE INVENTION

The present invention relates to a drive for motor using an inverter that converts a direct-current (hereinafter called DC) voltage to an alternating-current (hereinafter called AC) voltage by a switching operation of a switching element.

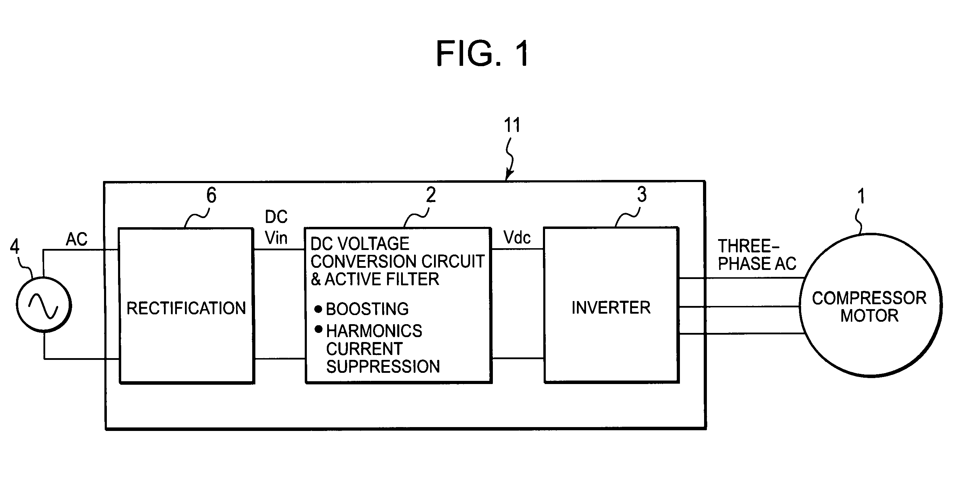

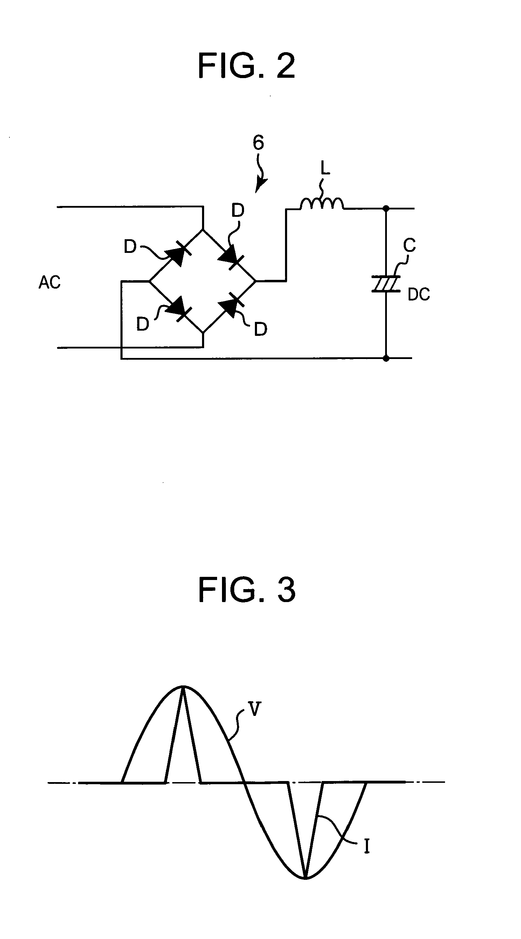

Conventionally, a voltage conversion circuit and an inverter have been used for drive control of a motor (see Japanese Patent No. 3308993, for example). FIG. 1 illustrates a drive circuit for a permanent magnet synchronous motor (compressor motor) that drives a compressor, for example. In this drawing, reference numeral 2 denotes a voltage conversion circuit and 3 denotes an inverter. The voltage conversion circuit 2 includes an inductance element, a switching element and a diode, to which a DC voltage (or a DC voltage from a battery) Vin is input, Vin being obtained by rectifying a voltage from a commercial AC source 4 using a rectification circuit 6 (illustrated in FIG. 2, including a group of diodes D, a coil L and a capacitor C for full-wave rectification). Then, the voltage conversion circuit 2 boosts the input voltage Vin by pulse-width modulation using a switching operation of the switching element, and outputs the thus boosted voltage as an output voltage (DC voltage) Vdc.

Herein, a duty (time ratio: conduction ratio) of ON/OFF of this switching element is controlled, thus controlling the output voltage Vdc to be output. The voltage conversion circuit 2 also has a function of suppressing a harmonics component of an input current I illustrated in FIG. 3 (V of FIG. 3 represents the AC voltage of the source 4).

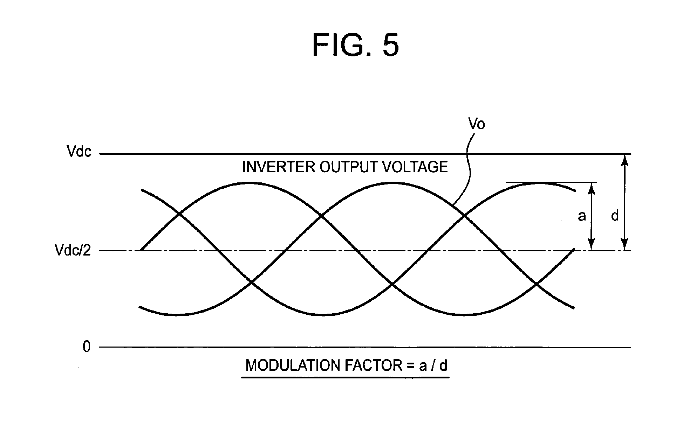

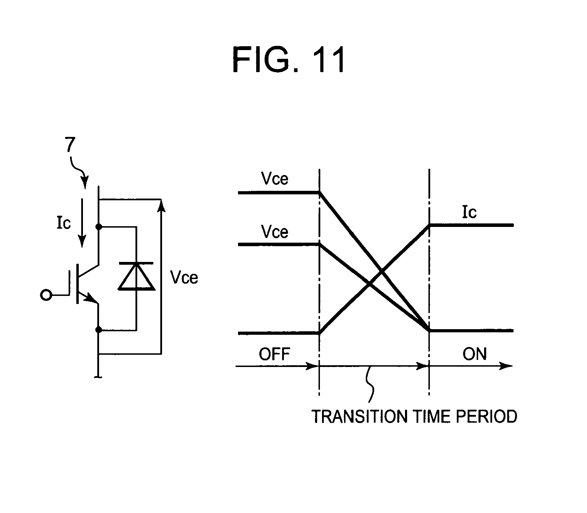

The inverter 3 includes a plurality of switching elements 7 as illustrated in FIG. 11, to which the output voltage Vdc output from the voltage conversion circuit 2 is input, and the inverter 3 pulse-width modulates this output voltage Vdc to convert the same into a three-phase alternating current of any frequency, and supplies the same to the motor 1. That is, each phase terminals of the motor 1 are connected with a positive side and a negative side of the voltage conversion circuit 2 via the switching element 7 in the inverter 3, and an ON/OFF operation of the switching element 7 for each phase causes a three-phase AC output voltage Vo as illustrate in FIG. 5 to be applied to the motor 1.

The motor 1 rotates at any rotational speed and any torque in accordance with the frequency of the AC voltage Vo supplied from the inverter 3, and drives a compressor as a load thereof.

### SUMMARY OF THE INVENTION

Herein, as methods for improving the efficiency of the inverter 3, there are one method of making specifications of the motor 1 adapted to a high voltage so as to decrease a current applied thereto, and another method of lowering a DC voltage (output voltage Vdc) input from the voltage conversion circuit 2 to the inverter 3 for operation. This is because a major electric-power loss in the inverter 3 results from a loss during the switching by the switching elements 7. That is, when a high DC voltage (output voltage Vdc) is input to the inverter 3, a collector-emitter voltage Vce of a switching element 7 making up the inverter 3 as illustrated in FIG. 11 increases as well. Therefore, in the latter case, power consumption Vce x Ic (this causes a loss) increases at the time of a switching operation where the switching element 7 turns OFF from ON or ON from OFF (transitional period). In the former case, since Ic can be reduced, a power consumption loss during the switching operation can be made smaller.

However, in the case where the specifications of the motor 1 are adapted to a high voltage, or when a DC voltage (output voltage Vdc) is lowered, the following problems occur. In the case of a higher voltage, when the voltage conversion circuit lacks the capacity, the motor cannot be operated up to a high load. In the case of lowering Vdc, the motor cannot be operated up to a high load in this case also because of shortage of the input DC voltage.

In order to cope with such conventional technical problems, the present invention provides a drive for motor that can be operated up to a high load while improving efficiency of an inverter.

A drive for a motor according to a first aspect of the present invention includes: a voltage conversion circuit that changes a value of a DC voltage and outputs the DC voltage; an inverter that converts the DC voltage output from the voltage conversion circuit into an AC voltage, the conversion being performed by a switching operation of a switching element; and control means that controls the DC voltage output from the voltage conversion circuit and controls a voltage output from the inverter by the switching element so as to drive the motor. The control means executes DC voltage adjustment control in which the DC voltage output from the voltage conversion circuit is controlled based on a modulation factor of the DC voltage modulated by the inverter so that the modulation factor becomes closer to 1.

A drive for a motor according to a second aspect of the present invention, in the above configuration, the control means controls the DC voltage output from the voltage conversion circuit so that the modulation factor has a predetermined margin with reference to 1.

A drive for a motor according to a third aspect of the present invention, in the above aspects of the present invention, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When a value of the DC voltage output from the voltage conversion circuit increases above a first value, the second modulation factor adjustment mode is executed, and when the value of the DC voltage output from the voltage conversion circuit decreases below a second value lower than the first value, the first modulation factor adjustment mode is executed.

A drive for a motor according to a fourth aspect of the present invention, in the above-described first or second aspects of the present invention, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When a difference between a value of the DC voltage output from the voltage conversion circuit and a value of the DC voltage input to the voltage conversion circuit increases above a first value, the second modulation factor adjustment mode is executed, and when the difference between the value of the DC voltage output from the voltage conversion circuit and the value of the DC voltage input to the voltage conversion circuit decreases below a second value lower than the first value, the first modulation factor adjustment mode is executed.

A drive for a motor according to a fifth aspect of the present invention, in the above-described first or second aspects of the present invention, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When a ratio of a value of the DC voltage output from the voltage conversion circuit to a value of the DC voltage input to the voltage conversion circuit increases above a first value, the second modulation factor adjustment mode is executed, and when the ratio of the value of the DC voltage output from the voltage conversion circuit to the value of the DC voltage input to the voltage conversion circuit decreases below a second value lower than the first value, the first modulation factor adjustment mode is executed.

A drive for a motor according to a sixth aspect of the present invention, the above-described first or second aspects of the present invention further includes current detection means that detects a current flowing through a reactor making up the voltage conversion circuit. The control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When, based on an output from the current detection means, a value of the current flowing through the reactor increases above a first value, the second modulation factor adjustment mode is executed, and when the value of the current flowing through the reactor decreases below a second value lower than the first value, the first modulation factor adjustment mode is executed.

A drive for a motor according to a seventh aspect of the present invention, the above-described first or second aspects of the present invention further includes temperature detection means that detects a temperature of a reactor making up the voltage conversion circuit. The control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When, based on an output from the temperature detection means, a value of the temperature of the reactor increases above a first value, the second modulation factor adjustment mode is executed, and when the value of the temperature of the reactor decreases below a second value lower than the first value, the first modulation factor adjustment mode is executed.

A drive for a motor according to an eighth aspect of the present invention, in the above-described first or second aspects of the present invention, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When an ON duty of a switching element making up the voltage conversion circuit increases above a first value, the second modulation factor adjustment mode is executed, and when the ON duty of the switching element decreases below a second value lower than the first value, the first modulation factor adjustment mode is executed.

A drive for a motor according to a ninth aspect of the present invention, in the above-described first or second aspects of the present invention, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When in order to bring the modulation factor closer to 1, a region requiring switching of a switching element making up the voltage conversion circuit increases above a first value, the second modulation factor adjustment mode is executed, and when the region requiring switching of the switching element decreases below a second value lower than the first value, the first modulation factor adjustment mode is executed.

A drive for a motor according to a tenth aspect of the present invention, in the above-described first or second aspects of the present invention, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When efficiency of the voltage conversion circuit decreases below a first value, the second modulation factor adjustment mode is executed, and when the efficiency of the voltage conversion circuit increases above a second value higher than the first value, the first modulation factor adjustment mode is executed.

According to a first aspect of the present invention, a drive for a motor includes: a voltage conversion circuit that changes a value of a DC voltage and outputs the DC voltage; an inverter that converts the DC voltage output from the voltage conversion circuit into an AC voltage, the conversion being performed by a switching operation of a switching element; and control means that controls the DC voltage output from the voltage conversion circuit and controls a voltage output from the inverter by the switching element so as to drive the motor. In the drive for a motor, the control means executes DC voltage adjustment control in which the DC voltage output from the voltage conversion circuit is controlled based on a modulation factor of the DC voltage modulated by the inverter so that the modulation factor becomes closer to 1. Therefore, the output voltage input from the voltage conversion circuit to the inverter can be made as low as possible, so as to reduce a loss generated during the switching of the switching elements making up the inverter 3.

Thus, the efficiency of the inverter can be remarkably improved. Especially, the minimum required DC voltage output from the voltage conversion circuit can be secured, so that the motor can be operated without problems up to high load.

According to a second aspect of the present invention, in addition to the above, the control means controls the DC voltage output from the voltage conversion circuit so that the modulation factor has a predetermined margin with reference to 1. Therefore, a necessary DC voltage can be applied to the inverter without problems even when the voltage of the power source or the load of the motor change abruptly, resulting in the stable driving of the motor.

According to a third aspect of the present invention, in addition to the above aspects, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When a value of the DC voltage output from the voltage conversion circuit increases above a first value, the second modulation factor adjustment mode is executed, and when the value of the DC voltage output from the voltage conversion circuit decreases below a second value lower than the first value, the first modulation factor adjustment mode is executed. Thus, the second modulation factor adjustment mode allows a high-voltage-ready motor to operate up to a high load without increasing the capacity of the voltage conversion circuit. Therefore, such a high-voltage-ready motor can be used, thus decreasing a current flowing through the motor and improving the inverter efficiency. Especially in this second modulation-factor adjustment mode also, the motor can operate with the weakening magnetic-flux closer to a minimum one, and therefore in this respect also the operation efficiency of the motor and the inverter efficiency can be improved.

Then, when the value of the DC voltage output from the voltage conversion circuit increases, the second modulation factor adjustment mode is executed, whereas when the DC voltage value decreases, the switching is performed to the first modulation factor adjustment mode. Therefore, the boost limit by the voltage conversion circuit can be judged, so that the switching from the first modulation factor adjustment mode to the second modulation factor adjustment mode can be performed. As a result, the boost width in the voltage conversion circuit can be suppressed so that a rise in cost for the voltage conversion circuit and an increase in a volume and a weight thereof can be avoided.

According to a fourth aspect of the present invention, in addition to the first and the second aspects, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When a difference between a value of the DC voltage output from the voltage conversion circuit and a value of the DC voltage input to the voltage conversion circuit increases above a first value, the second modulation factor adjustment mode is executed, and when the difference between the value of the DC voltage output from the voltage conversion circuit and the value of the DC voltage input to the voltage conversion circuit decreases below a second value lower than the first value, the first modulation factor adjustment mode is executed. Therefore, in addition to the effects from the third aspect, when the input voltage to the voltage conversion circuit has a margin, the first modulation factor adjustment mode can be executed until the DC voltage output from the voltage conversion circuit becomes a higher value, and therefore the efficiency deterioration due to the weakening magnetic flux control in the second modulation factor adjustment mode and the adverse effect on the motor can be suppressed to a minimum.

Especially, in this case the switching between the first modulation factor adjustment mode and the second modulation factor adjustment mode is performed using the boost width itself in the voltage conversion circuit, and therefore even when the input voltage fluctuates, the boost limit by the voltage conversion circuit can be judged more accurately so as to perform the switching from the switching between the first modulation factor adjustment mode to the second modulation factor adjustment mode.

According to a fifth aspect of the present invention, in addition to the first and the second aspects, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When a ratio of a value of the DC voltage output from the voltage conversion circuit to a value of the DC voltage input to the voltage conversion circuit increases above a first value, the second modulation factor adjustment mode is executed, and when the ratio of the value of the DC voltage output from the voltage conversion circuit to the value of the DC voltage input to the voltage conversion circuit decreases below a second value lower than the first value, the first modulation factor adjustment mode is executed. Similarly in addition to the effects from the third aspect, when the input voltage to the voltage conversion circuit has a margin, the first modulation factor adjustment mode can be executed until the DC voltage output from the voltage conversion circuit becomes a higher value, and therefore the efficiency deterioration due to the weakening magnetic flux control in the second modulation factor adjustment mode and the adverse effect on the motor can be suppressed to a minimum.

Especially, in this case also, the switching between the first modulation factor adjustment mode and the second modulation factor adjustment mode is performed using the boost ratio in the voltage conversion circuit, and therefore even when the input voltage fluctuates, the boost limit by the voltage conversion circuit can be judged more accurately so as to perform the switching from the first modulation factor adjustment mode to the second modulation factor adjustment mode.

According to a sixth aspect of the present invention, in addition to the first and the second aspects, the drive for a motor further includes current detection means that detects a current flowing through a reactor making up the voltage conversion circuit. The control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When, based on an output from the current detection means, a value of the current flowing through the reactor increases above a first value, the second modulation factor adjustment mode is executed, and when the value of the current flowing through the reactor decreases below a second value lower than the first value, the first modulation factor adjustment mode is executed. Thus, the second modulation factor adjustment mode similarly allows a high-voltage-ready motor to operate up to a high load without increasing the capacity of the voltage conversion circuit. Therefore, such a high-voltage-ready motor can be used, thus decreasing a current flowing through the motor and improving the inverter efficiency. Especially in this second modulation-factor adjustment mode also, the motor can operate with the weakening magnetic-flux closer to a minimum one, and therefore in this respect also the operation efficiency of the motor and the inverter efficiency can be improved.

In this case, when the value of the current flowing through the reactor making up the voltage conversion circuit increases, the second modulation factor adjustment mode is executed, whereas when the current value of the reactor decreases, the switching is performed to the first modulation factor adjustment mode. Therefore, the boost limit by the voltage conversion circuit can be judged based on the saturation of the current flowing through the reactor or based on the approach to the saturation, so that the switching from the first modulation factor adjustment mode to the second modulation factor adjustment mode can be performed. As a result, the boost width in the voltage conversion circuit can be suppressed so that a rise in cost for the voltage conversion circuit and an increase in a volume and a weight thereof can be avoided.

According to a seventh aspect of the present invention, in addition to the first and the second aspects, the drive for a motor further includes temperature detection means that detects a temperature of a reactor making up the voltage conversion circuit. The control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When, based on an output from the temperature detection means, a value of the temperature of the reactor increases above a first value, the second modulation factor adjustment mode is executed, and when the value of the temperature of the reactor decreases below a second value lower than the first value, the first modulation factor adjustment mode is executed. Thus, the second modulation factor adjustment mode similarly allows a high-voltage-ready motor which can not be driven at the rated speed unless high-voltage to operate up to a high load without increasing the capacity of the voltage conversion circuit. Therefore, such a high-voltage-ready motor can be used, thus decreasing a current flowing through the motor and improving the inverter efficiency. Especially in this second modulation-factor adjustment mode also, the motor can operate with the weakening magnetic-flux closer to a minimum one, and therefore in this respect also the operation efficiency of the motor and the inverter efficiency can be improved.

In this case, when the temperature of the reactor making up the voltage conversion circuit increases, the second modulation factor adjustment mode is executed, whereas when the temperature of the reactor decreases, the switching is performed to the first modulation factor adjustment mode. Therefore, the saturation of the current flowing through the reactor or the approach to the saturation can be known from an increase of the temperature of the reactor due to an increase of the current flowing through the reactor during the boosting. Based on that, the boost limit by the voltage conversion circuit can be judged, so that the switching from the first modulation factor adjustment mode to the second modulation factor adjustment mode can be performed. As a result, the boost width in the voltage conversion circuit can be suppressed so that a rise in cost for the voltage conversion circuit and an increase in a volume and a weight thereof can be avoided.

According to an eighth aspect of the present invention, in addition to the first and the second aspects, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When an ON duty of a switching element making up the voltage conversion circuit increases above a first value, the second modulation factor adjustment mode is executed, and when the ON duty of the switching element making up the voltage conversion circuit decreases below a second value lower than the first value, the first modulation factor adjustment mode is executed. Thus, the second modulation factor adjustment mode similarly allows a high-voltage-ready motor to operate up to a high load without increasing the capacity of the voltage conversion circuit. Therefore, such a high-voltage-ready motor can be used, thus decreasing a current flowing through the motor and improving the inverter efficiency. Especially in this second modulation-factor adjustment mode also, the motor can operate with the weakening magnetic-flux closer to a minimum one, and therefore in this respect also the operation efficiency of the motor and the inverter efficiency can be improved.

In this case, when the ON duty DU of the switching element making up the voltage conversion circuit increases, the second modulation factor adjustment mode is executed, whereas when the ON duty DU decreases, the switching is performed to the first modulation factor adjustment mode. Therefore, the boost limit by the voltage conversion circuit can be judged based on an increase of the ON duty of the switching element of the voltage conversion circuit during the boosting, so that the switching from the first modulation factor adjustment mode to the second modulation factor adjustment mode can be performed. As a result, the boost width in the voltage conversion circuit can be suppressed so that a rise in cost for the voltage conversion circuit and an increase in a volume and a weight thereof can be avoided.

According to a ninth aspect of the present invention, in addition to the first and the second aspects, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When in order to bring the modulation factor closer to 1, a region requiring switching of a switching element making up the voltage conversion circuit increases above a first value, the second modulation factor adjustment mode is executed, and when the region requiring switching of the switching element decreases below a second value lower than the first value, the first modulation factor adjustment mode is executed. Thus, the second modulation factor adjustment mode similarly allows a high-voltage-ready motor to operate up to a high load without increasing the capacity of the voltage conversion circuit. Therefore, such a high-voltage-ready motor can be used, thus decreasing a current flowing through the motor and improving the inverter efficiency. Especially in this second modulation-factor adjustment mode also, the motor can operate with the weakening magnetic-flux closer to a minimum one, and therefore in this respect also the operation efficiency of the motor and the inverter efficiency can be improved.

In this case, when the region requiring the switching of the switching element making up the voltage conversion circuit expanded in order to bring the modulation factor closer to 1, the second modulation factor adjustment mode is executed, whereas when the region requiring the switching of the switching element is decreased, the switching is performed to the first modulation factor adjustment mode. Therefore, the boost limit by the voltage conversion circuit can be judged based on the expanding of the region requiring the switching of the switching element in the voltage conversion circuit in order to make the modulation factor closer to 1, so that the switching from the first modulation factor adjustment mode to the second modulation factor adjustment mode can be performed. As a result, the boost width in the voltage conversion circuit can be suppressed so that a rise in cost for the voltage conversion circuit and an increase in a volume and a weight thereof can be avoided.

According to a tenth aspect of the present invention, in addition to the first and the second aspects, the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit. When efficiency of the voltage conversion circuit decreases below a first value, the second modulation factor adjustment mode is executed, and when the efficiency of the voltage conversion circuit increases above a second value higher than the first value, the first modulation factor adjustment mode is executed. Thus, the second modulation factor adjustment mode similarly allows a high-voltage-ready motor to operate up to a high load without increasing the capacity of the voltage conversion circuit. Therefore, such a high-voltage-ready motor can be used, thus decreasing a current flowing through the motor and improving the inverter efficiency. Especially in this second modulation-factor adjustment mode also, the motor can operate with the weakening magnetic-flux closer to a minimum one, and therefore in this respect also the operation efficiency of the motor and the inverter efficiency can be improved.

In this case, when the efficiency of the voltage conversion circuit decreases, the second modulation factor adjustment mode is executed, whereas when the efficiency of the voltage conversion circuit is enhanced, the switching is performed to the first modulation factor adjustment mode. Therefore, the boost limit by the voltage conversion circuit can be judged based on a decrease of the efficiency due to the expansion of the boost width, so that the switching from the first modulation factor adjustment mode to the second modulation factor adjustment mode can be performed. As a result, the boost width in the voltage conversion circuit can be suppressed so that a rise in cost for the voltage conversion circuit and an increase in a volume and a weight thereof can be avoided.

### BRIEF DESCRIPTION OF THE DRAWINGS

FIG. 1 is a circuit diagram of one embodiment of a drive of the present invention;
FIG. 2 is an electric circuit diagram of a rectification circuit of FIG. 1;
FIG. 3 explains a harmonics current suppression function of a voltage conversion circuit of FIG. 1;
FIG. 4 illustrates a control method in a first modulation factor adjustment mode by the controller of the drive of FIG. 1;
FIG. 5 illustrates a DC voltage output from the voltage conversion circuit of FIG. 1 and an output voltage from the inverter;
FIG. 6 illustrates a control method in a second modulation factor adjustment mode by the controller of the drive of FIG. 1;
FIG. 7 is a vector diagram of a q-axis current and a d-axis current of the motor of FIG. 1;
FIG. 8 is a flowchart illustrating an exemplary control operation by a controller of the drive of FIG. 1 (Embodiment 1);
FIG. 9 illustrates a relationship between an output and Vdc of the motor by the control operation of FIG. 8;
FIG. 10 is a flowchart illustrating another exemplary control operation by the controller of the drive of FIG. 1 (Embodiment 2);
FIG. 11 illustrates a switching element making up the inverter of the drive of FIG. 1;
FIG. 12 illustrates a circuit configuration of the voltage conversion circuit of FIG. 1;
FIG. 13 is a flowchart illustrating still another exemplary control operation by the controller of the drive of FIG. 1 (Embodiment 3);
FIG. 14 is a flowchart illustrating still another exemplary control operation by the controller of the drive of FIG. 1 (Embodiment 4);
FIG. 15 is a flowchart illustrating still another exemplary control operation by the controller of the drive of FIG. 1 (Embodiment 5);
FIG. 16 is a flowchart illustrating still another exemplary control operation by the controller of the drive of FIG. 1 (Embodiment 6);
FIG. 17 is a flowchart illustrating still another exemplary control operation by the controller of the drive of FIG. 1 (Embodiment 7);
FIG. 18 is a flowchart illustrating still another exemplary control operation by the controller of the drive of FIG. 1 (Embodiment 8);
FIG. 19 is a flowchart illustrating still another exemplary control operation by the controller of the drive of FIG. 1 (Embodiment 9); and
FIG. 20 is a flowchart illustrating still another exemplary control operation by the controller of the drive of FIG. 1 (Embodiment 10).

### DETAILED DESCRIPTION OF THE PREFERRED EMBODIMENT

The following describes embodiments of the present invention in detail, with reference to the drawings. FIGS. 1 and 2 illustrate the basic circuit configuration of a drive 1 of one embodiment of the present invention. That is, reference numeral 1 denotes a permanent magnet synchronous motor (compressor motor) that drives a compressor, 2 denotes a voltage conversion circuit, and 3 denotes an inverter, for example, and they have configurations and functions similar to those described above. Note that the inverter 3 is made up of the switching element 7 of FIG. 11 in a similar manner to the above.

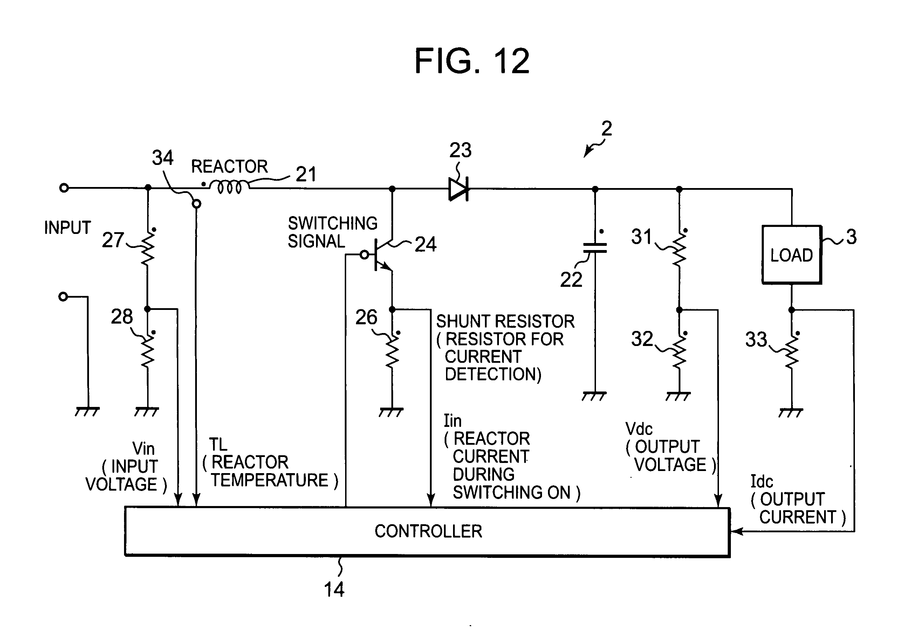

Referring now to FIG. 12, the circuit configuration of the voltage conversion circuit 2 of FIG. 1 will be described below. The input of the voltage conversion circuit 2 is connected with the output of the above-described rectification circuit 6 (FIG. 2), and the output thereof is connected with the input of the above-described inverter 3. The voltage conversion circuit 2 includes a reactor (inductance element) 21, a capacitor 22, a diode 23, a switching element 24, and the like as illustrated in FIG. 12. In this case, the reactor 21 is connected with the output of the rectification circuit 6, and the capacitor 22 is connected at a latter stage of the reactor 21 via the diode 23. The switching element 24 is connected between the ground and a connecting point between the reactor 21 and the diode 23.

The capacitor 22 smoothes a ripple of a current that has passed through the diode 23. The switching element 24 includes an IGBT and the like. When the switching element 24 is turned ON by a switching signal from a controller (control means including a microcomputer) 14 in the drive 11 of the present invention, a short-circuit current passes through the reactor 21. When a switching element 25 is turned ON, the circuit on the output side of a reactor 32 is short-circuited, thus letting a DC current pass through the reactor 21. Thereby, the reactor 21 stores energy. Thereafter when the switching element 24 is turned OFF, the energy stored in the reactor 21 is added to the input DC voltage, which then charges the capacitor 22. As a result, the DC voltage output from the rectification circuit 6 is boosted (PAM controlled). The ON duty of the switching element 24 (a ratio of an ON duration to one period as a whole including the ON duration and an OFF duration, a conduction ratio) is controlled, thus enabling the control of the input current to have a sine wave shape. Thereby, a power factor thereof can be improved, and harmonics can be suppressed.

Reference numeral 26 denotes a shunt resistor connected between the switching element 24 and the ground. A value Iin of an input current (a value of a reactor current passing through the reactor when the switching element 24 is turned ON) indicated by a voltage value of the shunt resistor 26 is input to the controller 14. A gate of the switching element 24 is connected with the controller 14. The controller 14 receives a value of an input voltage Vin (DC voltage input to the voltage conversion circuit 2) appearing at a connecting point between voltage-dividing resistors 27 and 28 connected at a former stage of the reactor 21, and a value of an output voltage Vdc (DC voltage output from the voltage conversion circuit 2) appearing at a connecting point between voltage-dividing resistors 31 and 32 connected at a latter stage of the capacitor 22. The controller 14 further receives a value of a DC current Idc indicated by a voltage value of a shunt resistor 33 connected between the inverter 3 as a load and the ground. Reference numeral 34 denotes a temperature sensor (temperature detection means) that detects a temperature of the reactor 21, and the controller 14 still further receives a temperature TL of the reactor 21 detected by the temperature sensor 34.

Then, in this embodiment, the controller 14 generates a switching signal that allows the switching element 24 to switch at a high frequency of 30 kHz, for example, in the entire region of the input voltage (Vin) waveform. Thereby, the output voltage Vdc output to the inverter 3 can be boosted in a wide range, while enabling higher-degree improvement of a power factor and such harmonics suppression. In this way, the controller 14 has a first filter function (full PAM control).

The controller 14 also has a second filter function that allows the switching element 24 to switch only around a zero-cross of the input voltage (Vin). In this case, the controller 14 of the present embodiment makes the switching element 24 switch at a predetermined ON duty with a period at a frequency beyond an audibility range of at least 15 kHz or higher (a frequency lower than the above-described first filter function). This switching is performed at three regions with phase angles of the input voltage (Vin) waveform from 0° to 35° (180° to 215°), from 35° to 70° (215° to 250°), and from 150° to 180° (330° to 0°), and the switching stops (OFF) at other regions. In other words, the switching element 24 switches at a region narrower than that in the first filter function (full PAM control) during one period of the input voltage (Vin).

At the regions from 0° to 35° (180° to 215°) and from 150° to 180° (330° to 0°), the ON duty for turning the switching element 24 ON may be 30%, whereas at the region from 35° to 70° (215° to 250°), the ON duty may be 60%. Thereby, the controller 14 has the second filter function (simple PAM control) in this embodiment.

Such control allows a reduction in harmonics and improvement of a power factor in a degree enabling the smoothing of the current waveform around the zero-cross and keeping it within a harmonics current regulated value, while boosting the voltage to some degree, although it is not of a wide range as in the above-described first filter function. Note that a loss in the switching element 24 in this case can be remarkably decreased as compared with that in the switching performed in the above-described first filter function.

In this case, the controller 14 switches between the above-described simple PAM control and full PAM control in accordance with a value of the input current Iin. That is, when the value of the input current Iin is lower than a full-PAM-control starting current value Ifstart, the controller 14 applies a switching signal to the switching element 24 to let the same switch around a zero-cross as stated above, thus performing the second filter function. Thereby, an electric power subjected to partial switching by the switching element 24 is applied to the inverter 3.

Herein, the full-PAM-control starting current value Ifstart is a preset input current value as a point of the boost limit by the voltage conversion circuit 2 where the switching between the simple PAM control and the full PAM control is to be performed. This preset input value is based on a waveform improvement degree for required boosting and harmonics suppression in a full-operation of state of the inverter 3, which can be understood beforehand.

When the load of the motor 1 increases to require a high output, and the value of the input current Iin becomes the full-PAM-control starting current value Ifstart or higher, the controller 14 shifts to the above-described full PAM control. That is, the controller 14 applies a switching signal generated at the entire region to the switching element 24. Thereby, the electric power that is boosted sufficiently by the switching element 24 and is subjected to a high-degree of waveform shaping is applied to the inverter 3 (the first filter function).

When the load of the motor 1 decreases so that the value of the input current Iin decreases to a predetermined full-PAM-control stopping current value Ifstop (a value lower than Ifstart), the controller 14 returns to the above-described simple PAM control (the second filter function).

In this way, the controller 14 of the present embodiment enables the selective switching between the first filter function (full PAM control) and the second filter function (simple PAM control). In this case, when a value of the input Iin is high, the first filter function is performed, whereas when a value of the input Iin is lower, the second filter function is performed. The thus effective switching enables suppression of harmonics and a certain degree of boosting, and if it reaches the boosting limit that cannot be handled by the second filter, the first filter function is performed so as to obtain necessary boosting and secure suppression of harmonics. Thereby, the switching loss in the switching element 24 can be suppressed while keeping the boosting and harmonics-suppression functions, so as to realize effective power supply.

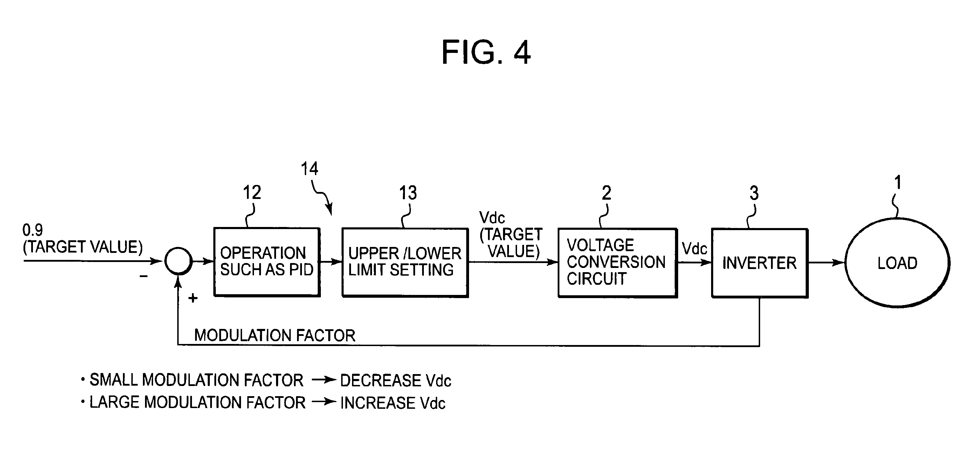

Next, FIGs. 4 and 5 illustrate the way to control by the controller 14 the drive 11 of the present invention. Firstly, FIG. 4 illustrates the way to control in a first modulation-factor adjustment mode in which the controller 14 executes DC voltage adjustment control. In FIG. 4, reference numeral 12 denotes an operation unit to which a modulation factor of the inverter 3 and a target value of the modulation factor are input, and that performs PID operation, for example, based on a deviation e of them. Reference numeral 13 denotes an upper and lower limit setting unit that sets an upper limit and a lower limit of a control amount operated by the operation unit 12. In this case, the modulation factor of the inverter 3 is a ratio a/d, where a equals 1/2 of the output voltage Vo of the inverter 3 and d equals 1/2 of the output voltage Vdc that is a DC voltage output from the voltage conversion circuit 2 as in FIG. 5. The target value of the modulation factor may be 1 or less, and has a predetermined margin with reference to 1, but is closer to 1. In the present embodiment, the target value is set as 0.9.

The operation unit 12 compares the set target value (0.9) of the modulation factor and the present modulation factor input from the inverter 3, performs operation so as to reduce the deviation e in proportion to the magnitude of the deviation e (proportional control P), operation so as to reduce a value obtained by integrating the deviation e (integration control I) and operation so as to reduce a change of the deviation e (differentiation control D), and adds them up to calculate a control amount of Vdc as a target (target value).

The upper and lower limit setting unit 13 sets an upper limit and a lower limit of the control amount calculated by the operation unit 12. The upper limit means an ability upper limit of the voltage conversion circuit 2, and the lower limit means a limit where if the output voltage Vdc is lowered beyond the limit, the current of the motor 1 increases, thus lowering the efficiency. Thus, the control amount is adjusted between these upper limit and lower limit.

The target value of Vdc subjected to the setting by the upper and lower limit setting unit 13 is input to the voltage conversion circuit 2. Based on the thus calculated target value of Vdc, the controller 14 executes the simple PAM control or the full PAM control as stated above in the voltage conversion circuit 2 to boost the input voltage Vin as the DC voltage (or in the case of a vehicle-mounted electrically-powered compressor, a DC voltage from a vehicle battery), thus outputting the output voltage (DC voltage) Vdc as the target value.

Similarly to the above, the inverter 3 includes a plurality of switching elements 7, to which the output voltage (DC voltage) Vdc output from the voltage conversion circuit 2 is input. The inverter 3 performs pulse-width modulation of the output voltage Vdc to convert the same into three-phase alternating current at any frequency and supply the same to the motor 1. The motor 1 rotates at any rotational speed and torque in accordance with the frequency of the AC voltage Vo supplied from the inverter 3 to drive the compressor as the load thereof. Therefore, the inverter 3 knows the modulation factor a/d that is the ratio of a to d, a being 1/2 of the output voltage Vo of the inverter 3 and d being 1/2 of the output voltage Vdc as in FIG. 5, and feeds back this modulation factor a/d to the operation unit 12 of the controller 14.

That is a description of the first modulation-factor adjustment mode where the controller 14 executes DC voltage adjustment control. In this first modulation-factor adjustment mode, when the modulation factor (a/d) of the inverter 3 is small, i.e., when the output voltage Vo of the inverter 3 is relatively smaller than the output voltage Vdc output from the voltage conversion circuit 2, the output voltage Vdc output from the voltage conversion circuit 2 will be decreased so that the modulation factor becomes closer to 0.9 as the target value. On the other hand, when the modulation factor (a/d) of the inverter 3 is large, i.e., when the output voltage Vo of the inverter 3 is closer to the output voltage Vdc output from the voltage conversion circuit 2 (although Vo cannot be larger than Vdc, they may be equal to each other), the output voltage Vdc output from the voltage conversion circuit 2 will be increased so that the modulation factor becomes closer to 0.9 as the target value.

In this way, in the first modulation-factor adjustment mode, especially when the modulation factor is small, the output voltage Vdc as the DC voltage input from the voltage conversion circuit 2 to the inverter 3 is made as low as possible, so as to reduce a loss generated during the switching of the switching elements 7 making up the inverter 3, thus enabling remarkable improvement of the efficiency of the inverter 3. Even when the modulation factor is large, the minimum required output voltage Vdc output from the voltage conversion circuit 2 can be secured, so that the motor 1 can be operated without problems up to a high load.

In this case, the control of the present embodiment is performed while giving a margin of 0.1 (predetermined margin) to the modulation factor 1 (the state where Vdc=Vo). This margin is not limited to 0.1 as in this embodiment, which may be smaller or larger than this. However, the controller 14 controls the output voltage Vdc output from the voltage conversion circuit 2 so as to allow for a predetermined margin of the modulation factor with reference to 1, whereby a necessary output voltage Vdc can be applied to the inverter 3 without problems even when the voltage of the power source 4 or the load of the motor 1 changes abruptly, resulting in the stable driving of the motor 1.

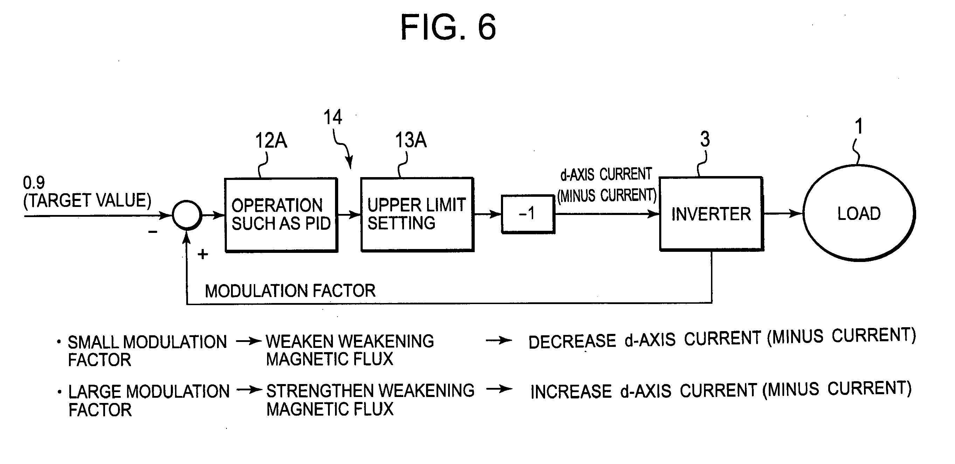

Next, FIG. 6 illustrates the way to control in a second modulation-factor adjustment mode in which the controller 14 executes weakening-magnetic flux control. In FIG. 6, reference numeral 12A denotes an operation unit to which a modulation factor of the inverter 3 and a target value of the modulation factor are input, and that performs PID operation, for example, based on a deviation e of them. Reference numeral 13A denotes an upper limit setting unit that sets an upper limit of a control amount operated by the operation unit 12. In this case also, the modulation factor of the inverter 3 is a ratio a/d, where a equals 1/2 of the output voltage Vo of the inverter 3 and d equals 1/2 of the output voltage Vdc output from the voltage conversion circuit 2 as in FIG. 5 as stated above. In this case also, the target value of the modulation factor may be 1 or less, and has a predetermined margin with reference to 1, but is closer to 1. In the present embodiment, the target value is set as 0.9.

The operation unit 12A compares the set target value (0.9) of the modulation factor and the present modulation factor input from the inverter 3, performs operation so as to reduce the deviation e in proportion to the magnitude of the deviation e (proportional control P), an operation so as to reduce a value obtained by integrating the deviation e (integration control I) and an operation so as to reduce a change of the deviation e (differentiation control D), and adds them up to calculate a negative field current component as a target, that is, a control amount (target value) of a negative d-axis current.

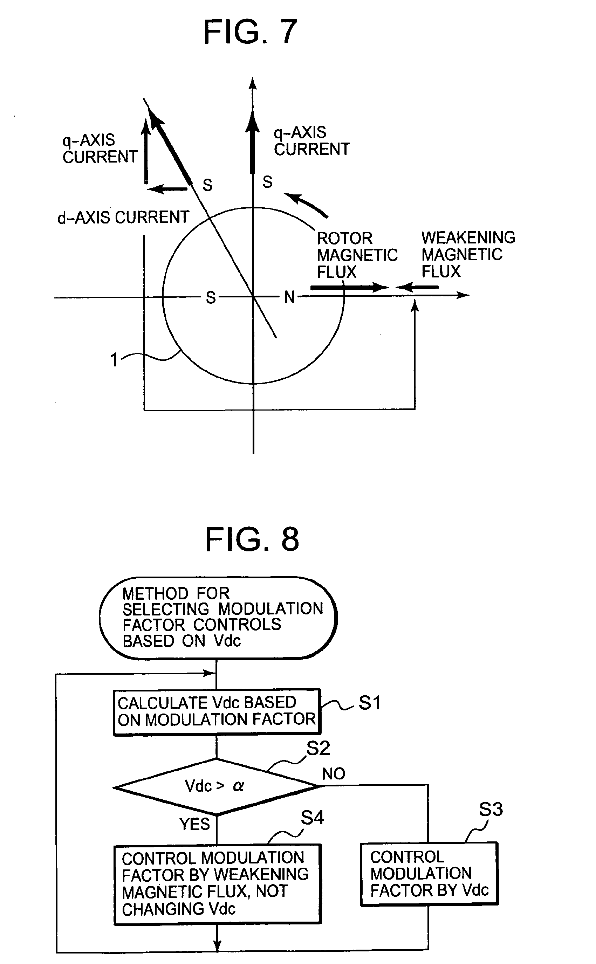

FIG. 7 is a vector diagram of a q-axis current (torque current component) and a d-axis current (field current component of the motor 1. When an air-conditioning system and a refrigerator using the compressor is in a pull-down state, the motor 1 is under a high load, and therefore is operated at a high speed. When the motor 1 is operated at a high speed, an induced voltage accordingly exceeds a terminal voltage (i.e., the AC voltage Vo output from the inverter 3), causing a current not flowing therethrough, resulting in a decrease of a torque and a failure to keep the output. In such a case, a stator winding is allowed to generate a magnetomotive force in the direction opposite to that of the magnetic flux of the rotor (magnetic flux of a permanent magnet) so as to suppress the induced voltage, whereby the torque can be secured. This is called the weakening-magnetic flux control.

In this weakening-magnetic flux control, the negative d-axis current flows through the stator winding in order to generate the magnetomotive force in the direction opposite to that of the rotor magnetic flux so as to secure the q-axis current contributing to the torque. However, since Vo will be suppressed, the modulation factor (a/d) can be controlled under a condition where the output voltage Vdc as the DC voltage output from the voltage conversion circuit 2 is constant. Thus, the operation unit 12A calculates the control amount of the negative q-axis current flowing through the stator winding of the motor 1 so that the modulation factor becomes closer to 0.9 as the target value.

Next, the upper limit setting unit 13A sets the upper limit of the control amount calculated by the operation unit 12A. Herein, the weakening-magnetic flux control decreases the magnetic flux of the rotor in the motor 1, and therefore a larger q-axis current will be required to obtain the same torque. Further, since the d-axis current also flows, the total current flowing through the winding of the rotor in the motor 1 will increase, and such an increase in current may burn the winding. Further, another problem may occur, causing demagnetization of the permanent magnet of the rotor because of the d-axis current flowing therethrough. Thus, the upper limit setting unit 13A sets the upper limit of the control amount in order to avoid problems caused by such a d-axis current flowing therethrough. Therefore, the control amount (negative d-axis current) is adjusted to be a value not more than this upper limit.

In this case, the output voltage Vdc output from the voltage conversion circuit 2 is controlled to be constant. Then, the target value of the negative d-axis current subjected to the setting by the upper limit setting unit 13A is input to the inverter 3, and the switching operation by the switching elements 7 making up the inverter 3 causes the negative d-axis current as the target value to flow through the motor 1. The motor 1 similarly rotates at any rotational speed and torque in accordance with a frequency of the AC voltage Vo supplied from the inverter 3, and drives a compressor as a load thereof. Similarly, the inverter 3 knows the modulation factor a/d and feeds back this modulation factor a/d to the operation unit 12.

That is a description of the second modulation-factor adjustment mode where the controller 14 executes the weakening-magnetic flux control. In this second modulation-factor adjustment mode, when the modulation factor (a/d) of the inverter 3 is small, i.e., when the output voltage Vo of the inverter 3 is relatively smaller than the output voltage Vdc output from the voltage conversion circuit 2, the negative d-axis current will be decreased so that the modulation factor becomes closer to 0.9 as the target value, thus weakening the weakening-magnetic flux. On the other hand, when the modulation factor (a/d) of the inverter 3 is large, i.e., when the output voltage Vo of the inverter 3 exceeds the output voltage Vdc output from the voltage conversion circuit 2, when they are equal to each other or when they are closer to each other although not exceeding, the minus d-axis current is increased within a range of the above-stated upper limit so that the modulation factor becomes closer to 0.9 as the target value, thus strengthening the weakening-magnetic flux.

In this way, in the second modulation-factor adjustment mode, especially when the motor 1 is under a high load where the motor 1 is operated at a high speed, the motor 1 can be operated without increasing the output voltage Vdc input from the voltage conversion circuit 2 to the inverter 3. This means that a high-voltage-ready motor can be operated up to a high load without increasing the capacity of the voltage conversion circuit 2. Such a high-voltage-ready motor can decrease a current flowing through the motor, so that the inverter efficiency can be improved.

Especially in this second modulation-factor adjustment mode, in order that the modulation factor may be kept at 0.9 as the target value of the present embodiment, the weakening magnetic-flux control is performed by passing a negative d-axis current closer to a minimum one therethrough. Therefore, in this respect also, the operation efficiency of the motor 1 and the inverter efficiency can be improved. In this case also, control is performed in the present embodiment so as to allow for a margin of 0.1 (a predetermined margin) with reference to the modulation factor 1 (the state where Vdc=Vo), whereby stable driving of the motor 1 can be realized without problems even when the voltage of the power source 4 or the load of the motor 1 changes abruptly.

### Embodiment 1

Next, FIG. 8 is a flowchart illustrating an exemplary actual control operation by the controller 14.
At Step S1 of FIG. 8, the controller 14 firstly executes the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

At the following Step S2, judgment is made as to whether the output voltage Vdc currently output from the voltage conversion circuit 2 is larger or not than the upper limit α in the above-described upper and lower limit setting unit, for example. Then, if it is not more than the upper limit α, the controller 14 proceeds to Step S3 to continuously execute the DC voltage adjustment control in the first modulation factor adjustment mode that is being currently executed.

Herein, when the motor 1 becomes under a high load state, for example, and the DC voltage adjustment control causes an increase of Vdc so that Vdc exceeds the above-stated upper limit α, then the controller 14 proceeds to Step S4 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged.

During the execution of the second modulation factor adjustment mode, if Vdc decreases to the upper limit α or less, then the controller 14 proceeds from Step S2 to Step S3 to return to the first modulation factor adjustment mode from the second modulation factor adjustment mode. In this case, after the switching from the first modulation factor adjustment mode to the second modulation factor adjustment mode, the controller 14 prohibits the proceeding from Step S2 to Step S3 during a predetermined time period based on the integration of a timer that the controller 14 has as its own function, but controls to proceed to Step S4. Also after the opposite switching from the second modulation factor adjustment mode to the first modulation factor adjustment mode, the controller 14 prohibits the proceeding from Step S2 to Step S4 during a predetermined time period based on the integration of a timer that the controller 14 has as its own function, but controls to proceed to Step S3. Thereby, even when Vdc changes in the vicinity of the upper limit α, the controller 14 can prevent the inconvenient frequent switching between the first modulation factor adjustment mode and the second modulation factor adjustment mode.

In this way, the switching between the first modulation factor adjustment mode and the second modulation factor adjustment mode is performed in accordance with the output voltage Vdc as the DC voltage output from the voltage conversion circuit 2, whereby the boost width in the voltage conversion circuit 2 can be suppressed with consideration given to the boost limit by the voltage conversion circuit 2. Thus, a rise in cost for the voltage conversion circuit 2 and an increase in a volume and a weight thereof can be avoided.

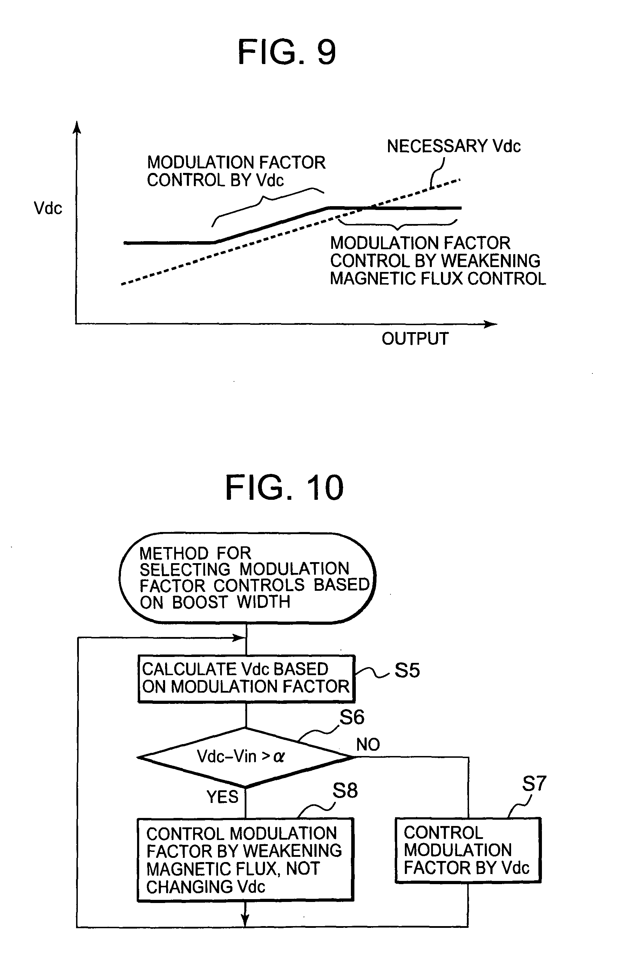

FIG. 9 illustrates a relationship between the output of the motor 1 and Vdc according to such a control operation. In this drawing, a short-dashed line indicates Vdc required for operating the motor 1, which shows the case where the modulation factor is set as 1. A solid line indicates Vdc actually controlled by the controller 14 in the flowchart of FIG. 8, and an inclined range along above the short-dashed line (the difference between them is the margin 0.1 as stated above) is a normal operation range.
In this operation range, the voltage conversion circuit 2 outputs Vdc that is a minimum required voltage in accordance with the Vdc necessary for the operation with a margin of 0.1 given to the modulation factor.

In the range horizontally extending to the left from the left end of this normal operation range, Vdc is under a light load where Vdc is at the lower limit as stated above. Since Vdc is kept constant in the high load range with a high output while setting the above-stated upped limit α as the border, Vdc extends horizontally to the right from the right end of the normal operation range. In this high load range, the modulation factor is controlled to be 0.9 by the above-described weakening magnetic flux control.

### Embodiment 2

Next, FIG. 10 is a flowchart illustrating another exemplary actual control operation by the controller 14. Firstly at Step S5 of FIG. 10, the controller 14 similarly executes the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

At the following Step S6, judgment is made as to whether a difference (Vdc-Vin, i.e., the boost width) between the output voltage Vdc that is the DC voltage currently output from the voltage conversion circuit 2 and the input voltage Vin of the voltage conversion circuit 2 is larger or not than a predetermined upper limit α in this case (the upper limit is a limit of the boost width by the voltage conversion circuit 2). Then, if it is not more than the upper limit α, the controller 14 proceeds to Step S7 to continuously execute the DC voltage adjustment control in the first modulation factor adjustment mode that is being currently executed.

Herein, when the motor 1 becomes under a high load state, for example, and the DC voltage adjustment control causes an increase of Vdc so that the boost width exceeds the above-stated upper limit α, then the controller 14 proceeds to Step S8 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged.

During the execution of the second modulation factor adjustment mode, if Vdc decreases to the upper limit α or less, then the controller 14 proceeds from Step S6 to Step S7 to return to the first modulation factor adjustment mode from the second modulation factor adjustment mode. In this case, after the switching from the first modulation factor adjustment mode to the second modulation factor adjustment mode, the controller 14 prohibits the proceeding from Step S6 to Step S7 during a predetermined time period based on the integration of a timer that the controller 14 has as its own function, but controls to proceed to Step S8. Further, also after the opposite switching from the second modulation factor adjustment mode to the first modulation factor adjustment mode, the controller 14 prohibits the proceeding from Step S6 to Step S8 during a predetermined time period based on the integration of a timer that the controller 14 has as its own function, but controls to proceed to Step S7. Thereby, even when the boost width changes in the vicinity of the upper limit α, the controller 14 can prevent the inconvenient frequent switching between the first modulation factor adjustment mode and the second modulation factor adjustment mode.

In this way, in this control also, the switching between the first modulation factor adjustment mode and the second modulation factor adjustment mode is performed in accordance with the difference between the output voltage Vdc as the DC voltage output from the voltage conversion circuit 2 and the input voltage Vin (boost width), whereby the boost width in the voltage conversion circuit 2 can be suppressed. Thus, a rise in cost for the voltage conversion circuit 2 and an increase in a volume and a weight thereof can be avoided. In addition to that, in this control, when the input voltage Vin to the voltage conversion circuit 2 has a margin, the first modulation factor adjustment mode can be executed until the output voltage Vdc output from the voltage conversion circuit 2 becomes a higher value, and therefore the efficiency deterioration due to the weakening magnetic flux control in the second modulation factor adjustment mode and the adverse effect on the motor 1 can be suppressed to a minimum.

Especially, the switching between the first modulation factor adjustment mode and the second modulation factor adjustment mode is performed using the boost width itself in the voltage conversion circuit 2, and therefore the boost limit by the voltage conversion circuit 2 can be judged accurately so as to perform the switching from the first modulation factor adjustment mode to the second modulation factor adjustment mode.

### Embodiment 3

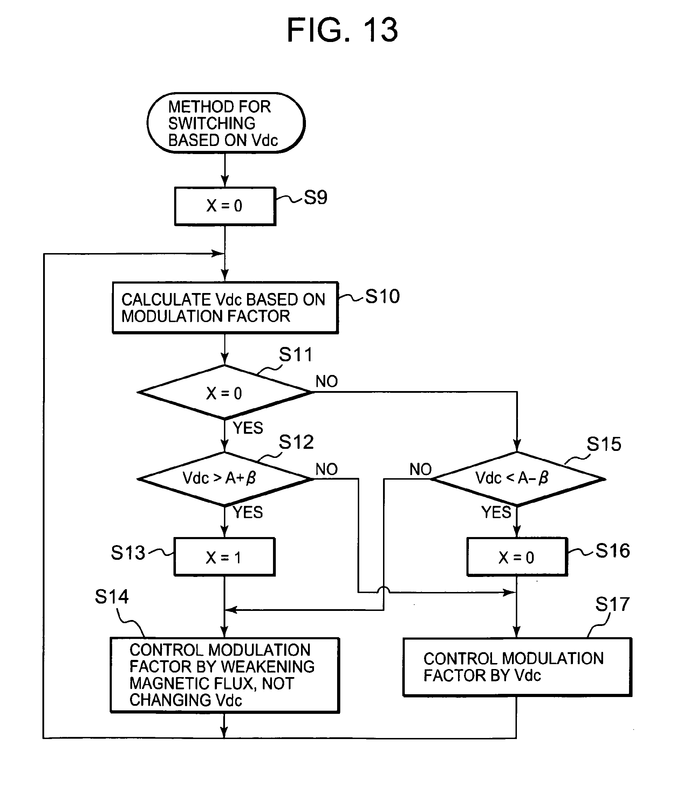

Next, FIG. 13 is a flowchart illustrating another exemplary control operation by the controller 14 of FIG. 8. In this case, the controller 14 switches between the first modulation factor adjustment mode and the second modulation factor adjustment mode while considering a predetermined hysteresis width 2β in addition to the control of FIG. 8. That is, at Step S9 of FIG. 13, the controller 14 firstly resets a flag X (set as 0). At the following Step S10, the controller 14 executes the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

Next, at Step S11, judgment is made as to whether the flag X is reset or not. Since it is reset, the procedure goes to Step S12, where judgment is made as to whether the output voltage Vdc currently output from the voltage conversion circuit 2 is higher or not than A+β (a first value) as an upper limit α in the above-described upper and lower limit setting unit, for example. Then, if it is not more than the upper limit A+β, the controller 14 proceeds to Step S17 to continuously execute the DC voltage adjustment control in the first modulation factor adjustment mode that is being currently executed.

Herein, when the motor 1 becomes under a high load state, for example, and the DC voltage adjustment control causes an increase of Vdc so that Vdc exceeds the above-stated upper limit A+β, then the controller 14 proceeds from Step S12 to Step S13 to set the flag X (as 1), and then proceeds to Step S14 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged. Thereafter, the procedure goes from Step S11 to Step S15, where judgment is made as to whether Vdc becomes lower or not than A-β (a second value). If it is not lower than the second value, the procedure goes to Step S14 to continue the second modulation factor adjustment mode.

During the execution of the second modulation factor adjustment mode, if Vdc decreases to A-β or less, then the controller 14 proceeds from Step S15 to Step S16 to reset the flag X and proceeds to Step S17 to return to the first modulation factor adjustment mode from the second modulation factor adjustment mode. Such control including hysteresis makes it possible to prevent, even when Vdc changes in the vicinity of the upper limit A+β, the inconvenient frequent switching between the first modulation factor adjustment mode and the second modulation factor adjustment mode.

In this case also, the switching between the first modulation factor adjustment mode and the second modulation factor adjustment mode is performed in accordance with the output voltage Vdc as the DC voltage output from the voltage conversion circuit 2, whereby the boost width in the voltage conversion circuit 2 can be suppressed with consideration given to the boost limit by the voltage conversion circuit 2. Thus, a rise in cost for the voltage conversion circuit 2 and an increase in a volume and a weight thereof can be avoided.

### Embodiment 4

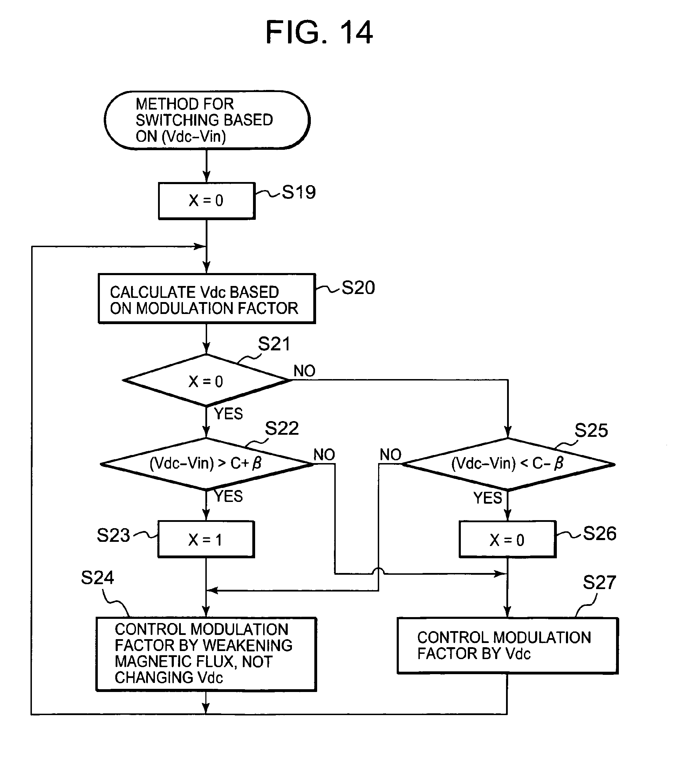

Next, FIG. 14 is a flowchart illustrating another exemplary control operation by the controller 14 of FIG. 10. In this case, the controller 14 switches between the first modulation factor adjustment mode and the second modulation factor adjustment mode while considering a predetermined hysteresis width 2β in addition to the control of FIG. 10. That is, at Step S19 of FIG. 14, the controller 14 firstly resets a flag X (set as 0). At the following Step S20, the controller 14 executes the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

Next, at Step S21, judgment is made as to whether the flag X is reset or not. Since it is reset, the procedure goes to Step S22, where judgment is made as to whether a difference (Vdc-Vin, i.e., the boost width) between the output voltage output from the voltage conversion circuit 2 and the input voltage Vin of the voltage conversion circuit 2 is larger or not than C+β (a first value) as a predetermined upper limit α in this case (the upper limit is a limit of the boost width in the voltage conversion circuit 2). Then, if it is not more than the upper limit C+β, the controller 14 proceeds to Step S27 to continuously execute the DC voltage adjustment control in the first modulation factor adjustment mode that is being currently executed.

Herein, when the motor 1 becomes under a high load state, for example, and the DC voltage adjustment control causes an increase of Vdc so that Vdc exceeds the above-stated upper limit C+β, then the controller 14 proceeds from Step S22 to Step S23 to set the flag X (as 1), and then proceeds to Step S24 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged. Thereafter, the procedure goes from Step S21 to Step S25, where judgment is made as to whether the boost width becomes lower or not than C-β (a second value). If it is not lower than the second value, the procedure goes to Step S24 to continue the second modulation factor adjustment mode.

During the execution of the second modulation factor adjustment mode, if the boost width decreases to C-β or less, then the controller 14 proceeds from Step S25 to Step S26 to reset the flag X and proceeds to Step S27 to return to the first modulation factor adjustment mode from the second modulation factor adjustment mode. Such control including hysteresis makes it possible to prevent, even when the boost width changes in the vicinity of the upper limit C+β, the inconvenient frequent switching between the first modulation factor adjustment mode and the second modulation factor adjustment mode.

In this case also, the switching between the first modulation factor adjustment mode and the second modulation factor adjustment mode is performed in accordance with the difference between the output voltage Vdc as the DC voltage output from the voltage conversion circuit 2 and the input voltage Vin (boost width), whereby the boost width in the voltage conversion circuit 2 can be suppressed. Thus, a rise in cost for the voltage conversion circuit 2 and an increase in a volume and a weight thereof can be avoided. In addition to that, in this control also, when the input voltage Vin to the voltage conversion circuit 2 has a margin, the first modulation factor adjustment mode can be executed until the output voltage Vdc output from the voltage conversion circuit 2 becomes a higher value, and therefore the efficiency deterioration due to the weakening magnetic flux control in the second modulation factor adjustment mode and the adverse effect on the motor 1 can be suppressed to a minimum.

Similarly the switching between the first modulation factor adjustment mode and the second modulation factor adjustment mode is performed using the boost width itself in the voltage conversion circuit 2, and therefore the boost limit by the voltage conversion circuit 2 can be judged accurately so as to perform the switching from the first modulation factor adjustment mode to the second modulation factor adjustment mode.

### Embodiment 5

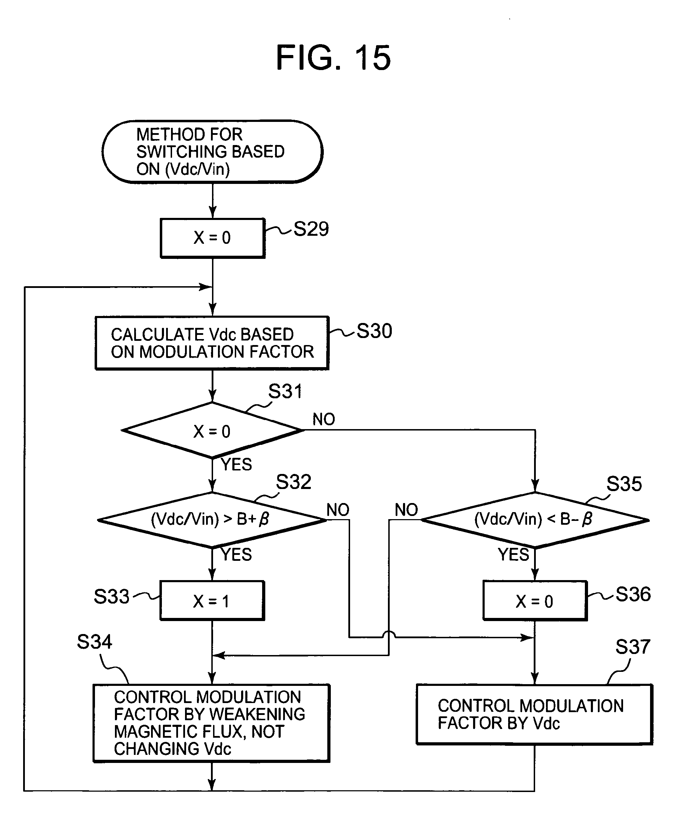

Next, FIG. 15 is a flowchart illustrating still another exemplary actual control operation by the controller 14. In this case, the controller 14 switches between the first modulation factor adjustment mode and the second modulation factor adjustment mode based on a ratio of the output voltage Vdc to the input voltage Vin of the voltage conversion circuit 2, i.e., Vdc/Vin. That is, at Step S29 of FIG. 15, the controller 14 firstly resets a flag X (set as 0). At the following Step S30, the controller 14 executes the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

Next, at Step S31, judgment is made as to whether the flag X is reset or not. Since it is reset, the procedure goes to Step S32, where judgment is made as to whether the ratio of the output voltage Vdc currently output from the voltage conversion circuit 2 to the input voltage Vin currently input to the voltage conversion circuit 2 (Vdc/Vin, i.e., a boost ratio) is larger or not than C+β (a first value) as a predetermined upper limit in this case (the upper limit is a limit of the boost ratio by the voltage conversion circuit 2). Then, if it is not more than the upper limit B+β, the controller 14 proceeds to Step S37 to continuously execute the DC voltage adjustment control in the first modulation factor adjustment mode that is being currently executed.

Herein, when the motor 1 becomes under a high load state, for example, and the DC voltage adjustment control causes an increase of Vdc so that the boost ratio exceeds the above-stated upper limit B+β, then the controller 14 proceeds from Step S32 to Step S33 to set the flag X (as 1), and then proceeds to Step S34 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged. Thereafter, the procedure goes from Step S31 to Step S35, where judgment is made as to whether the boost ratio becomes lower or not than B-β (a second value). If it is not lower than the second value, the procedure goes to Step S34 to continue the second modulation factor adjustment mode.

During the execution of the second modulation factor adjustment mode, if the boost ratio decreases to B-β or less, then the controller 14 proceeds from Step S35 to Step S36 to reset the flag X and proceeds to Step S37 to return to the first modulation factor adjustment mode from the second modulation factor adjustment mode. Such control including hysteresis makes it possible to prevent, even when the boost ratio changes in the vicinity of the upper limit B+β, the inconvenient frequent switching between the first modulation factor adjustment mode and the second modulation factor adjustment mode.

In this case also, the switching between the first modulation factor adjustment mode and the second modulation factor adjustment mode is performed in accordance with the ratio of the output voltage Vdc as the DC voltage output from the voltage conversion circuit 2 to the input voltage Vin as the DC voltage input to the voltage conversion circuit 2 (the boost ratio), whereby the degree of the boosting (corresponding to the boost width) in the voltage conversion circuit 2 can be suppressed. Thus, a rise in cost for the voltage conversion circuit 2 and an increase in a volume and a weight thereof can be avoided. In addition to that, in this control also, when the input voltage Vin to the voltage conversion circuit 2 has a margin, the first modulation factor adjustment mode can be executed until the output voltage Vdc output from the voltage conversion circuit 2 becomes a higher value, and therefore the efficiency deterioration due to the weakening magnetic flux control in the second modulation factor adjustment mode and the adverse effect on the motor 1 can be suppressed to a minimum.

In this case also, the switching between the first modulation factor adjustment mode and the second modulation factor adjustment mode is performed using the boost ratio in the voltage conversion circuit 2, and therefore the boost limit by the voltage conversion circuit 2 can be judged accurately so as to perform the switching from the first modulation factor adjustment mode to the second modulation factor adjustment mode.

### Embodiment 6

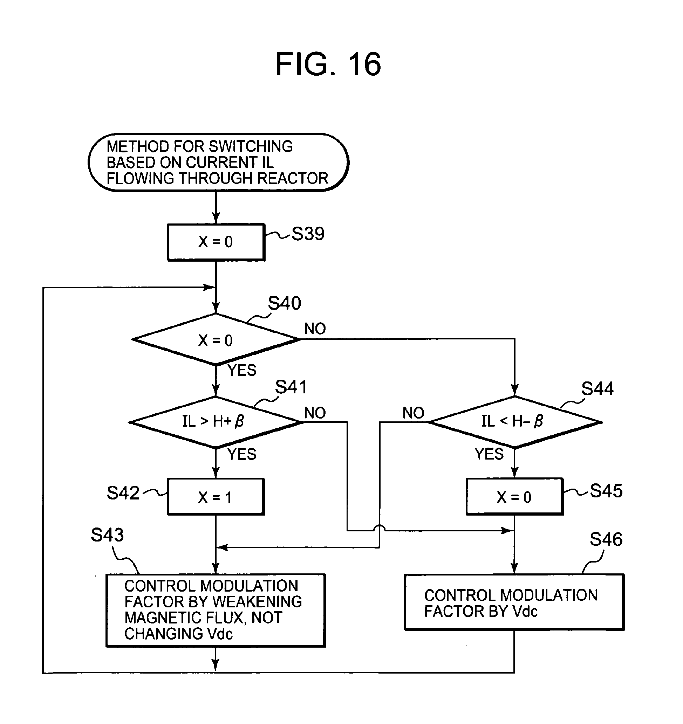

Next, FIG. 16 is a flowchart illustrating still another exemplary actual control operation by the controller 14. In this case, the controller 14 switches between the first modulation factor adjustment mode and the second modulation factor adjustment mode based on a current IL flowing through the reactor 21. That is, at Step S39 of FIG. 16, the controller 14 firstly resets a flag X (set as 0). At the following Step S40, the controller 14 judges whether the flag X is reset or not, and since it is reset, the procedure goes to Step S41, where judgment is made as to whether a value of the current IL (input current Iin) is larger or not than H+β (a first value) as a predetermined upper limit in this case (the upper limit is a value where the current IL flowing through the reactor 21 is saturated, or is a limit closer to the saturation). Then, if it is not more than the upper limit H+β, the controller 14 proceeds to Step S46 to execute the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

Herein, when the motor 1 becomes under a high load state, for example and the value of the current IL as the input current Iin increases to exceed the upper limit H+β, then the controller 14 proceeds from Step S41 to Step S42 to set the flag X (as 1), and then proceeds to Step S43 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged. Thereafter, the procedure goes from Step S40 to Step S44, where judgment is made as to whether the value of the current IL becomes lower or not than H-β (a second value). If it is not lower than the second value, the procedure goes to Step S43 to continue the second modulation factor adjustment mode.

During the execution of the second modulation factor adjustment mode, if the value of the current IL decreases to H-β or less, then the controller 14 proceeds from Step S44 to Step S45 to reset the flag X and proceeds to Step S46 to return to the first modulation factor adjustment mode from the second modulation factor adjustment mode. Such control including hysteresis makes it possible to prevent, even when the current IL changes in the vicinity of the upper limit H+β, the inconvenient frequent switching between the first modulation factor adjustment mode and the second modulation factor adjustment mode.

In this case also, the second modulation factor adjustment mode allows the high-voltage-ready motor 1 to operate up to a high load without increasing the capacity of the voltage conversion circuit 2. Therefore, such a high-voltage-ready motor can be used, thus decreasing a current flowing through the motor 1 and improving the inverter efficiency. Especially in this second modulation-factor adjustment mode also, the motor can operate with the weakening magnetic-flux closer to a minimum one, and therefore in this respect also the operation efficiency of the motor 1 and the inverter efficiency can be improved.

In this case, when the value of the current IL (input current Vin) flowing through the reactor 21 making up the voltage conversion circuit 2 increases, the second modulation factor adjustment mode is executed, whereas when the current value of the reactor 21 decreases, the switching is performed to the first modulation factor adjustment mode. Therefore, the boost limit by the voltage conversion circuit 2 can be judged based on the saturation of the current IL flowing through the reactor 21 or based on the approach to the saturation, so that the switching from the first modulation factor adjustment mode to the second modulation factor adjustment mode can be performed. As a result, the boost width in the voltage conversion circuit 2 can be suppressed so that a rise in cost for the voltage conversion circuit 2 and an increase in a volume and a weight thereof can be avoided.

### Embodiment 7

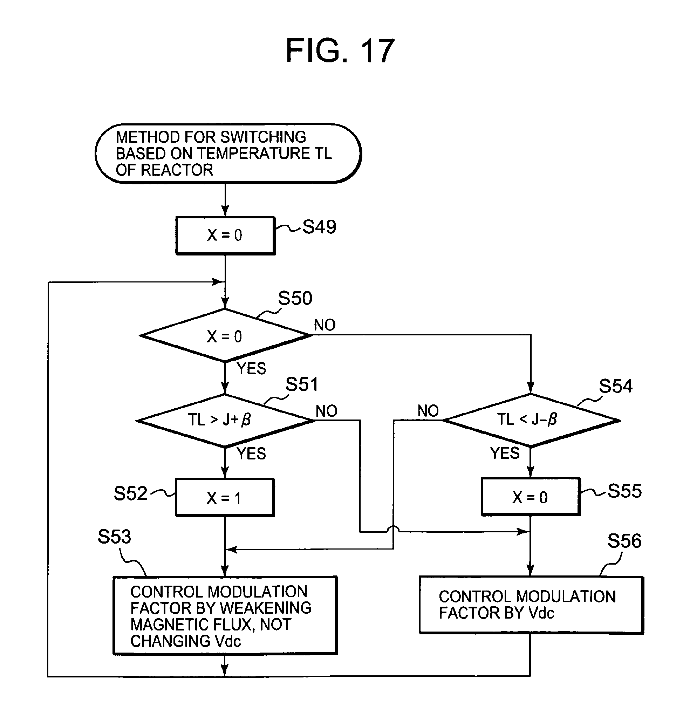

Next, FIG. 17 is a flowchart illustrating still another exemplary actual control operation by the controller 14. In this case, the controller 14 switches between the first modulation factor adjustment mode and the second modulation factor adjustment mode based on a temperature TL of the reactor 21 detected by the temperature sensor 34. That is, at Step S49 of FIG. 17, the controller 14 firstly resets a flag X (set as 0). At the following Step S50, the controller 14 judges whether the flag X is reset or not, and since it is reset, the procedure goes to Step S51, where judgment is made as to whether the temperature TL of the reactor 21 is larger or not than J+β (a first value) as a predetermined upper limit in this case (the upper limit is a value of the temperature of the reactor 21 when the current IL flowing through the reactor 21 is saturated, or is a limit closer to the saturation). Then, if it is not more than the upper limit J+β, the controller 14 proceeds to Step S56 to execute the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

Herein, when the motor 1 becomes under a high load state, for example, the value of the current IL of the reactor 21 increases and the temperature TL of the reactor 21 accordingly generating heat exceeds the upper limit J+β, then the controller 14 proceeds from Step S51 to Step S52 to set the flag X (as 1), and then proceeds to Step S53 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged. Thereafter, the procedure goes from Step S50 to Step S54, where judgment is made as to whether the value of the temperature TL becomes lower or not than J-β (a second value). If it is not lower than the second value, the procedure goes to Step S53 to continue the second modulation factor adjustment mode.

During the execution of the second modulation factor adjustment mode, if the value of the temperature TL decreases to J-β or less, then the controller 14 proceeds from Step S54 to Step S55 to reset the flag X and proceeds to Step S56 to return to the first modulation factor adjustment mode from the second modulation factor adjustment mode. Such control including hysteresis makes it possible to prevent, even when the temperature TL changes in the vicinity of the upper limit J+β, the inconvenient frequent switching between the first modulation factor adjustment mode and the second modulation factor adjustment mode.

In this case also, the second modulation factor adjustment mode allows the high-voltage-ready motor 1 to operate up to a high load without increasing the capacity of the voltage conversion circuit 2. Therefore, such a high-voltage-ready motor can be used, thus decreasing a current flowing through the motor 1 and improving the inverter efficiency. Especially in this second modulation-factor adjustment mode, the motor can operate with the weakening magnetic-flux closer to a minimum one, and therefore in this respect also the operation efficiency of the motor 1 and the inverter efficiency can be improved.

In this case, when the temperature TL of the reactor 21 making up the voltage conversion circuit 2 increases, the second modulation factor adjustment mode is executed, whereas when the temperature TL of the reactor 21 decreases, the switching is performed to the first modulation factor adjustment mode. Therefore, the saturation of the current IL flowing through the reactor 21 or the approach to the saturation can be known from an increase of the temperature TL of the reactor 21 due to an increase of the current IL flowing through the reactor 21 during the boosting. Based on that, the boost limit by the voltage conversion circuit 2 can be judged, so that the switching from the first modulation factor adjustment mode to the second modulation factor adjustment mode can be performed. As a result, the boost width in the voltage conversion circuit 2 can be suppressed so that a rise in cost for the voltage conversion circuit 2 and an increase in a volume and a weight thereof can be avoided.

### Embodiment 8

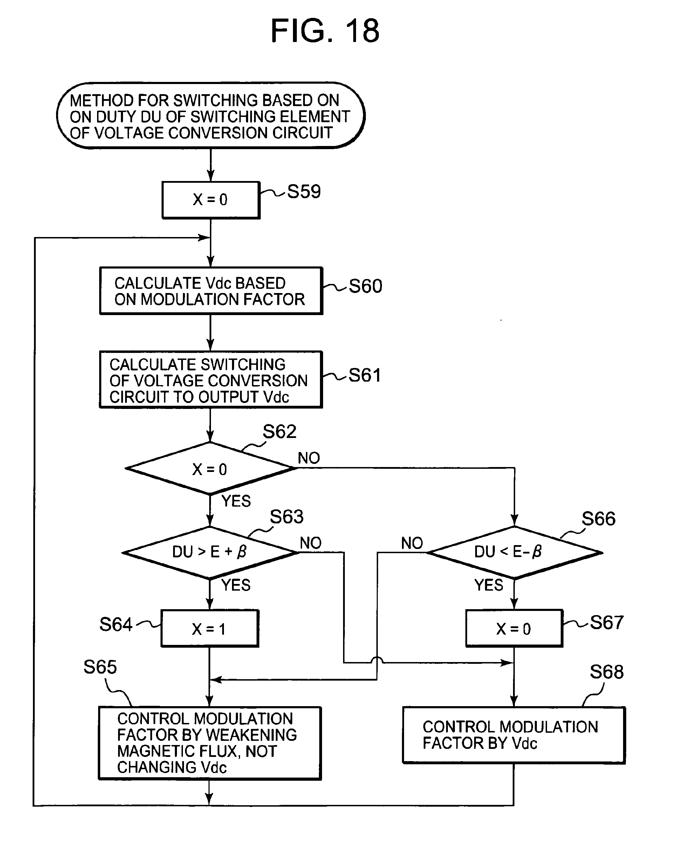

Next, FIG. 18 is a flowchart illustrating still another exemplary actual control operation by the controller 14. In this case, the controller 14 switches between the first modulation factor adjustment mode and the second modulation factor adjustment mode based on an ON duty DU of the switching element 24 making up the voltage conversion circuit 2. That is, at Step S59 of FIG. 18, the controller 14 firstly resets a flag X (set as 0). At the following Step S60, the controller 14 executes the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

At the following Step S61, the controller 14 calculates the ON duty DU of the switching by the switching element 24 of the voltage conversion circuit 2 to output Vdc (a value calculated in the above-described simple PAM control or full PAM control), and at Step S62 judgment is made as to whether the flag X is reset or not. Since it is reset, the procedure goes to Step S63, where judgment is made as to whether the present ON duty DU of the switching element 24 is larger or not than E+β (a first value) as a predetermined upper limit in this case (the upper limit is a limit of the ON duty for obtaining the upper limit boost width by the voltage conversion circuit 2). Then, if it is not more than the upper limit E+β, the controller 14 proceeds to Step S68 proceeds to Step S68 to continuously execute the DC voltage adjustment control in the first modulation factor adjustment mode that is being currently executed.

Herein, when the motor 1 becomes under a high load state, for example, and the ON duty DU of the switching element 24 is increased above the upper limit E+β, then the controller 14 proceeds from Step S63 to Step S64 to set the flag X (as 1), and then proceeds to Step S65 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged. Thereafter, the procedure goes from Step S62 to Step S66, where judgment is made as to whether the ON duty DU becomes lower or not than E-β (a second value). If it is not lower than the second value, the procedure goes to Step S65 to continue the second modulation factor adjustment mode.

During the execution of the second modulation factor adjustment mode, if the ON duty DU decreases to E-β or less, then the controller 14 proceeds from Step S66 to Step S67 to reset the flag X and proceeds to Step S68 to return to the first modulation factor adjustment mode from the second modulation factor adjustment mode. Such control including hysteresis makes it possible to prevent, even when the ON duty DU changes in the vicinity of the upper limit E+β, the inconvenient frequent switching between the first modulation factor adjustment mode and the second modulation factor adjustment mode.

In this case also, the second modulation factor adjustment mode allows the high-voltage-ready motor 1 to operate up to a high load without increasing the capacity of the voltage conversion circuit 2. Therefore, such a high-voltage-ready motor can be used, thus decreasing a current flowing through the motor 1 and improving the inverter efficiency. Especially in this second modulation-factor adjustment mode also, the motor can operate with the weakening magnetic-flux closer to a minimum one, and therefore in this respect also the operation efficiency of the motor 1 and the inverter efficiency can be improved.

In this case, when the ON duty DU of the switching element 24 making up the voltage conversion circuit 2 increases, the second modulation factor adjustment mode is executed, whereas when the ON duty DU decreases, the switching is performed to the first modulation factor adjustment mode. Therefore, the boost limit by the voltage conversion circuit 2 can be judged based on an increase of the ON duty DU of the switching element 24 of the voltage conversion circuit 2 during the boosting, so that the switching from the first modulation factor adjustment mode to the second modulation factor adjustment mode can be performed. As a result, the boost width in the voltage conversion circuit 2 can be suppressed so that a rise in cost for the voltage conversion circuit 2 and an increase in a volume and a weight thereof can be avoided.

### Embodiment 9

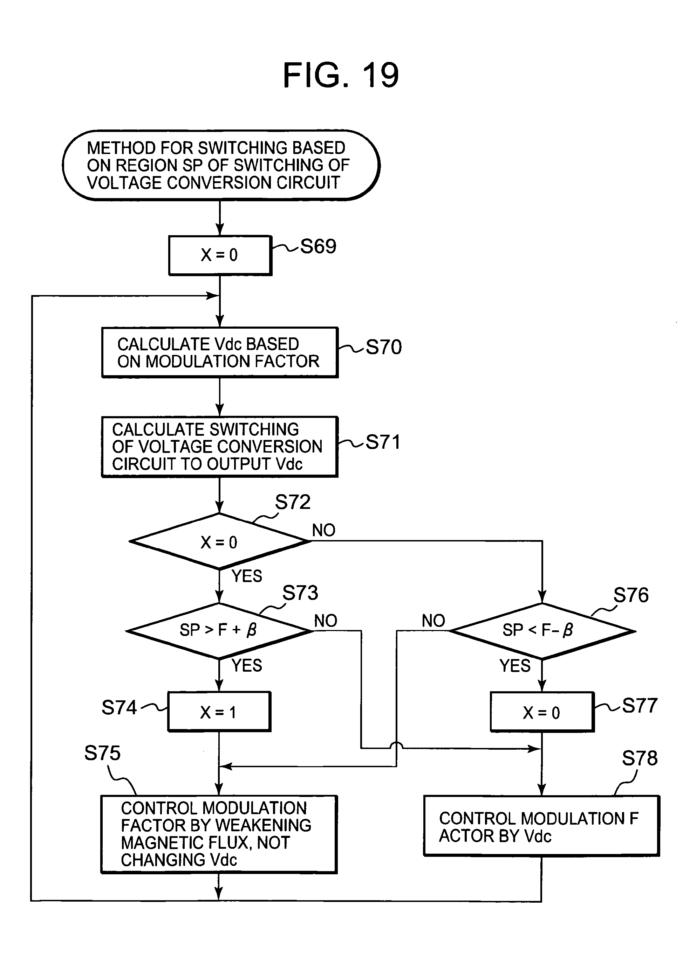

Next, FIG. 19 is a flowchart illustrating still another exemplary actual control operation by the controller 14. In this case, the controller 14 switches between the first modulation factor adjustment mode and the second modulation factor adjustment mode based on a region SP for the switching of the switching element 24 making up the voltage conversion circuit 2. That is, at Step S69 of FIG. 19, the controller 14 firstly resets a flag X (set as 0). At the following Step S70, the controller 14 executes the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

At the following Step S71, the controller 14 calculates a switching signal for conducting the above-described simple PAM control (the second filter function) or full PAM function (the first filer function) to output Vdc. As described above, in the full PAM control, switching is conducted at the entire region of the input voltage Vin waveform, whereas in the simple PAM control the switching is conducted only at a region around zero-cross of Vin. That is, the simple PAM control has a narrow region requiring the switching of the switching element 24 because the modulation factor is made closer to 1, and the full PAM control has an extended region requiring the switching of the switching element 24 because the modulation factor is similarly made closer to 1.

At the following Step S72, judgment is made as to whether flag X is reset or not. Since it is reset, the procedure goes to Step S73, where judgment is made as to whether the region SP requiring the switching of the switching element 24 is wider than F+β (a first value) as a predetermined upper limit in this case (the upper limit is a value larger than the switching region in the simple PAM control but narrower than the switching region (entire region) in the full PAM control). Then, if it is not more than the upper limit F+β, the controller 14 proceeds to Step S78 to continuously execute the DC voltage adjustment control in the first modulation factor adjustment mode that is being currently executed.

Herein, when the motor 1 becomes under a high load state, for example, the input current Iin increases above the full-PAM-control starting current value Ifstart to switch to the full PAM control, and the region SP exceeds the above-described upper limit F+β, then the controller 14 proceeds from Step S73 to Step S74 to set the flag X (as 1), and then proceeds to Step S75 to shift to the second modulation factor adjustment mode. In this mode, the controller 14 controls so that the modulation factor may be 0.9 as the target value (made closer to 1) by the weakening magnetic flux control of FIG. 6 as stated above while keeping the current Vdc unchanged. Thereafter, the procedure goes from Step S72 to Step S76, where judgment is made as to whether the region SP becomes narrower or not than F-β (a second value as a value of the switching region or less in the simple PAM control). If it is not narrower than the second value, the procedure goes to Step S75 to continue the second modulation factor adjustment mode.

During the execution of the second modulation factor adjustment mode, if the input current Iin decreases to the full-PAM-control stopping current value Ifstop or less to switch to the simple PAM control, so that the region SP decreases to F-β or less, then the controller 14 proceeds from Step S76 to Step S77 to reset the flag X and proceeds to Step S78 to return to the first modulation factor adjustment mode from the second modulation factor adjustment mode.

This embodiment describes that case where the switching of the switching element 24 is executed by switching between the full PAM control and the simple PAM control, i.e., switching at two stages, which is not a limiting one. In the control method, the switching region SP may be changed at a plurality of stages of three or more stages in accordance with the input current Iin, or may be changed linearly. In such a case, the control including hysteresis as in this embodiment makes it possible to prevent, even when the switching region SP changes in the vicinity of the upper limit F+β, the inconvenient frequent switching between the first modulation factor adjustment mode and the second modulation factor adjustment mode.

In this case also, the second modulation factor adjustment mode allows the high-voltage-ready motor 1 to operate up to a high load without increasing the capacity of the voltage conversion circuit 2. Therefore, such a high-voltage-ready motor can be used, thus decreasing a current flowing through the motor 1 and improving the inverter efficiency. Especially in this second modulation-factor adjustment mode also, the motor can operate with the weakening magnetic-flux closer to a minimum one, and therefore in this respect also the operation efficiency of the motor 1 and the inverter efficiency can be improved.

In this case, when the region SP requiring the switching of the switching element 24 making up the voltage conversion circuit 2 is expanded in order to make the modulation factor closer to 1, the second modulation factor adjustment mode is executed, whereas when the region SP requiring the switching of the switching element 24 is decreased, the switching is performed to the first modulation factor adjustment mode. Therefore, the boost limit by the voltage conversion circuit 2 can be judged based on the expanding of the region SP requiring the switching of the switching element 24 in the voltage conversion circuit 2 in order to make the modulation factor closer to 1 (in this embodiment, based on the switching to the full PAM control), so that the switching from the first modulation factor adjustment mode to the second modulation factor adjustment mode can be performed. As a result, the boost width in the voltage conversion circuit 2 can be suppressed so that a rise in cost for the voltage conversion circuit 2 and an increase in a volume and a weight thereof can be avoided. Embodiment 10

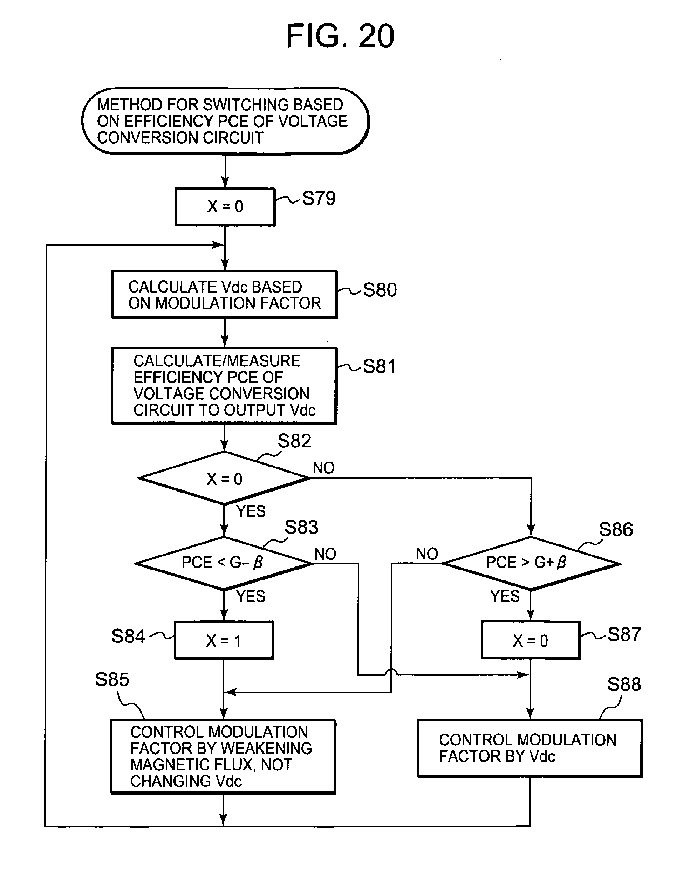

Next, FIG. 20 is a flowchart illustrating still another exemplary actual control operation by the controller 14. In this case, the controller 14 switches between the first modulation factor adjustment mode and the second modulation factor adjustment mode based on efficiency PCE of the voltage conversion circuit 2. That is, at Step S79 of FIG. 20, the controller 14 firstly resets a flag X (set as 0). At the following Step S80, the controller 14 executes the first modulation factor adjustment mode as the control method of FIG. 4, where the output voltage Vdc output from the voltage conversion circuit 2 is controlled in accordance with the modulation factor (a/d) feed back from the inverter 3 so that the modulation factor can be 0.9 as the target value (become closer to 1).

At the following Step S81, the controller 14 calculates or measures the efficiency PCE of the voltage conversion circuit 2 to output Vdc. This efficiency PCE of the voltage conversion circuit 2 equals an electric power Pdc (calculated from Vdc and Idc)/input electric power Pin (calculated from Vin and Iin) (PCE=Pdc/Pic). The efficiency PCE of the voltage conversion circuit 2 decreases with an increase of the boost width.

At the following Step S82, judgment is made as to whether flag X is reset or not. Since it is reset, the procedure goes to Step S83, where judgment is made as to whether the present efficiency PCE of the voltage conversion circuit 2 is lower than G-β (a first value) as a predetermined lower limit in this case (the lower limit is a limit of the efficiency in the upper limit boost width of the voltage conversion circuit 2). Then, if it is not less than the lower limit G-β, the controller 14 proceeds to Step S88 to continuously execute the DC voltage adjustment control in the first modulation factor adjustment mode that is being currently executed.

Herein, when the motor 1 becomes under a high load state, for example, the boost width in the DC voltage adjustment control increases, and the efficiency PCE of the voltage conversion circuit 2 decreases below the above-stated G-β, then the controller 14 proceeds from Step S83 to Step S84 to set the flag X (as 1), and then proceeds to Step S85 to shift to the second modulation factor adjustment mode. In this mode, the controller 14 controls so that the modulation factor may be 0.9 as the target value (made closer to 1) by the weakening magnetic flux control of FIG. 6 as stated above while keeping the present Vdc unchanged. Thereafter, the procedure goes from Step S82 to Step S86, where judgment is made as to whether the efficiency PCE becomes higher or not than G+β (a second value). If it is not higher than the second value, the procedure goes to Step S85 to continue the second modulation factor adjustment mode.

During the execution of the second modulation factor adjustment mode, if the boost width decreases, and the efficiency PCE increases above G+β, then the controller 14 proceeds from Step S86 to Step S87 to reset the flag X and proceeds to Step S88 to return to the first modulation factor adjustment mode from the second modulation factor adjustment mode. Such control including hysteresis makes it possible to prevent, even when the efficiency PCE changes in the vicinity of the lower limit G-β, the inconvenient frequent switching between the first modulation factor adjustment mode and the second modulation factor adjustment mode.

In this case also, the second modulation factor adjustment mode allows the high-voltage-ready motor 1 to operate up to a high load without increasing the capacity of the voltage conversion circuit 2. Therefore, such a high-voltage-ready motor can be used, thus decreasing a current flowing through the motor 1 and improving the inverter efficiency. Especially in this second modulation-factor adjustment mode also, the motor can operate with the weakening magnetic-flux closer to a minimum one, and therefore in this respect also the operation efficiency of the motor 1 and the inverter efficiency can be improved.

In this case, when the efficiency PCE of the voltage conversion circuit 2 decreases, the second modulation factor adjustment mode is executed, whereas when the efficiency PCE of the voltage conversion circuit 2 increases, the switching is performed to the first modulation factor adjustment mode. Therefore, the boost limit by the voltage conversion circuit 2 can be judged based on a decrease of the efficiency PCE due to the expansion of the boost width, so that the switching from the first modulation factor adjustment mode to the second modulation factor adjustment mode can be performed. As a result, the boost width in the voltage conversion circuit 2 can be suppressed so that a rise in cost for the voltage conversion circuit 2 and an increase in a volume and a weight thereof can be avoided.

The method for determining the numerical values and the control amounts described in the above embodiments is not limiting one, but it can be decided appropriately depending on the motor.

## Claims

1. A drive for a motor, comprising:
a voltage conversion circuit that changes a value of a DC voltage and outputs the DC voltage;
an inverter that converts the DC voltage output from the voltage conversion circuit into an AC voltage, the conversion being performed by a switching operation of a switching element; and
control means that controls the DC voltage output from the voltage conversion circuit and controls a voltage output from the inverter by the switching element so as to drive the motor,
wherein the control means executes DC voltage adjustment control in which the DC voltage output from the voltage conversion circuit is controlled based on a modulation factor of the DC voltage modulated by the inverter so that the modulation factor becomes closer to 1.

2. The drive for a motor according to claim 1, wherein the control means controls the DC voltage output from the voltage conversion circuit so that the modulation factor has a predetermined margin with reference to 1.

3. The drive for a motor according to claim 1 or 2,
wherein the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit, and
when a value of the DC voltage output from the voltage conversion circuit increases above a first value, the second modulation factor adjustment mode is executed, and when the value of the DC voltage output from the voltage conversion circuit decreases below a second value lower than the first value, the first modulation factor adjustment mode is executed.

4. The drive for a motor according to claim 1 or 2,
wherein the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit, and
when a difference between a value of the DC voltage output from the voltage conversion circuit and a value of the DC voltage input to the voltage conversion circuit increases above a first value, the second modulation factor adjustment mode is executed, and when the difference between the value of the DC voltage output from the voltage conversion circuit and the value of the DC voltage input to the voltage conversion circuit decreases below a second value lower than the first value, the first modulation factor adjustment mode is executed.

5. The drive for a motor according to claim 1 or 2,
wherein the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit, and
when a ratio of a value of the DC voltage output from the voltage conversion circuit to a value of the DC voltage input to the voltage conversion circuit increases above a first value, the second modulation factor adjustment mode is executed, and when the ratio of the value of the DC voltage output from the voltage conversion circuit to the value of the DC voltage input to the voltage conversion circuit decreases below a second value lower than the first value, the first modulation factor adjustment mode is executed.

6. The drive for a motor according to claim 1 or 2, further comprising current detection means that detects a current flowing through a reactor making up the voltage conversion circuit,
wherein the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit, and
when, based on an output from the current detection means, a value of the current flowing through the reactor increases above a first value, the second modulation factor adjustment mode is executed, and when the value of the current flowing through the reactor decreases below a second value lower than the first value, the first modulation factor adjustment mode is executed.

7. The drive for a motor according to claim 1 or 2, further comprising temperature detection means that detects a temperature of a reactor making up the voltage conversion circuit,
wherein the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit, and
when, based on an output from the temperature detection means, a value of the temperature of the reactor increases above a first value, the second modulation factor adjustment mode is executed, and when the value of the temperature of the reactor decreases below a second value lower than the first value, the first modulation factor adjustment mode is executed.

8. The drive for a motor according to claim 1 or 2,
wherein the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit, and
when an ON duty of a switching element making up the voltage conversion circuit increases above a first value, the second modulation factor adjustment mode is executed, and when the ON duty of the switching element decreases below a second value lower than the first value, the first modulation factor adjustment mode is executed.

9. The drive for a motor according to claim 1 or 2,
wherein the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit, and
when in order to bring the modulation factor closer to 1, a region requiring switching of a switching element making up the voltage conversion circuit increases above a first value, the second modulation factor adjustment mode is executed, and when the region requiring switching of the switching element decreases below a second value lower than the first value, the first modulation factor adjustment mode is executed.

10. The drive for a motor according to claim 1 or 2,
wherein the control means includes a first modulation factor adjustment mode and a second modulation factor adjustment mode, in the first modulation factor adjustment mode the modulation factor being brought closer to 1 by the DC voltage adjustment control, and in the second modulation factor adjustment mode the modulation factor being brought closer to 1 by letting a field current component in a direction weakening a magnetic flux of a permanent magnet in the motor flow therethrough without changing the DC voltage output from the voltage conversion circuit, and
when efficiency of the voltage conversion circuit decreases below a first value, the second modulation factor adjustment mode is executed, and when the efficiency of the voltage conversion circuit increases above a second value higher than the first value, the first modulation factor adjustment mode is executed.

## Amended claims

### Amended claims under Art. 19.1 PCT

**1.** A drive for a motor, comprising:
a voltage conversion circuit that changes a value of a DC voltage and outputs the DC voltage;
an inverter that converts the DC voltage output from the voltage conversion circuit into an AC voltage, the conversion being performed by a switching operation of a switching element; and
control means that controls the DC voltage output from the voltage conversion circuit and controls a voltage output from the inverter by the switching element so as to drive the motor,
wherein the control means executes DC voltage adjustment control in which the DC voltage output from the voltage conversion circuit is controlled based on a modulation factor of the DC voltage modulated by the inverter within a range so as to let harmonics component of an input current within a regulated value so that the modulation factor becomes closer to 1.

Statement under Art. 19.1 PCT
Claim 1 has been amended to clarify that the control means executes DC voltage adjustment control in which the DC voltage output from the voltage conversion circuit is controlled based on a modulation factor of the DC voltage modulated by the inverter within a range so as to let harmonics component of an input current within a regulated value so that the modulation factor becomes closer to 1. The contents thereof have been disclosed in paragraph 0045 of the specification.

Cited document (Document 1: JP2004-357442A) discloses at paragraphs 0013 to 0031 a method of suppressing unnecessary harmonics component included in an inverter output voltage by driving a PWM inverter at a high modulation rate. However, the cited document is not for modulation processing while focusing on the harmonics component during the modulation.

According to the present invention, modulation is conducted within a range so as to let harmonics component of an input current within a regulated value, while focusing on the harmonics component, thus achieving the effects of decreasing harmonics and improving a power factor.
